(19)

Europäisches
Patentamt
European
Patent Office
Office européen
des brevets

(11)  **EP 2 237 183 B1**

(12)  **EUROPEAN PATENT SPECIFICATION**

(45) Date of publication and mention
of the grant of the patent:
**15.05.2013 Bulletin 2013/20**

(51) Int Cl.:
***G06F 21/00*** *(2013.01)*

(21) Application number: **09157041.6**

(22) Date of filing: **31.03.2009**

(54) **Method for security purposes**

Verfahren für Sicherheitszwecke

Procédé de sécurité

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**06.10.2010 Bulletin 2010/40**

(73) Proprietors:
• **Technische Universität München
80333 München (DE)**
• **Rührmair, Ulrich
83679 Sachsenkam (DE)**

(72) Inventors:
• **Stutzmann, Martin
85435 Erding (DE)**
• **Finley, Jonathan
85609 Ascheim (DE)**
• **Jirauschek Christian
80538 München (DE)**
• **Csaba György
80634 München (DE)**
• **Lugli Paolo
85399 Hallbergmoos (DE)**
• **Biebl Erwin
82110 Germering (DE)**
• **Dietmüller Roland
80637 München (DE)**
• **Müller Kai
85716 Unterschleissheim (DE)**

• **Langhuth Hagen
81667 München (DE)**
• **Rührmair Ulrich
83679 Sachsenkam (DE)**

(74) Representative: **Herrmann, Franz
Dendorfer & Herrmann
Patentanwälte Partnerschaft
Bayerstrasse 3
80335 München (DE)**

(56) References cited:
**WO-A1-03/049228        WO-A1-2006/046183
WO-A1-2008/152564**

• **AA KORIÄ B ET AL: "Robust Key Extraction from
Physical Uncloneable Functions" 19 May 2005
(2005-05-19), APPLIED CRYPTOGRAPHY AND
NETWORK SECURITY; [LECTURE NOTES IN
COMPUTER SCIENCE;;LNCS], SPRINGER-
VERLAG, BERLIN/HEIDELBERG, PAGE(S) 407 -
422 , XP019010616 ISBN: 9783540262237 *
Sections 1.1-1.3, 3-4.2 ***
• **PAPPU R ET AL: "Physical one-way functions"
SCIENCE, AMERICAN ASSOCIATION FOR THE
ADVANCEMENT OF SCIENCE, WASHINGTON,
DC; US, vol. 297, no. 5589, 1 September 2002
(2002-09-01), pages 2026-2030, XP002285061
ISSN: 0036-8075**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

The invention relates to a method for security purposes with the acts of:

- performing a measurement on a physical object by:

   > using a measurement device that is detachable from the physical object,
   > applying a challenge signal generated by the measurement device to the physical object
   > receiving a response signal dependent on a setting of the challenge signal and dependent on the inner structure of the object;

- determining a characteristic of the response signal
- validating the response signal by comparing a characteristic of the response signal obtained by the measurement with a characteristic of the response signal obtained from a previous measurement.

The invention further relates to an item provided with a physical object for performing the method and a software product comprising program code for implementing the method.

Such a method is known from PAPPU, R.; RECHT, B.; TAYLOR, J.; GERSHENFELD, N.: "Physical One-Way Functions", Science, Volume 297, pages 2026-2030, September 20, 2002. In the known method, a scattering module is irradiated by laser from various directions and with various wave lengths. The pattern of the scattered light is detected by a detector. The images generated by the detector are analyzed and characterized by a key that allows for distinguishing between the scattering patterns contained in the images of the detector. The known apparatus can be used for implementing an authentication protocol based on illumination-key pairs. During the enrollment stage, several illumination-key pairs are acquired at a trusted terminal. During the verification stage of the protocol, the server challenges the scattering module with a specific illumination and compares the key of the response with the known key. The scattering module is authenticated if the Hamming-distance between the actual key and the key measured previously is below a predefined threshold.

One disadvantage of the known method is that a bulky and complicated measuring device is needed for executing the method.

The known method deals with the concept of so-called unique physical objects, their security applications, and their practical implementation. By the term unique object, we understand a physical object that possesses measurable properties that cannot be reproduced or cloned in another physical object. Ideally, this security against reproduction should even hold against the original manufacturer of the object, a feature which dramatically increases the security properties of unique objects against fraud. It also distinguishes unique objects from any related approaches like the security features on banknotes, or holograms on EC cards, which can be manufactured en masse with the same properties.

In the known method the unique object is a random distribution of optically active particles in a solid body matrix, for example a PMMA matrix. Due to incontrollable variations in a standard production process (e.g. solution - spin coating - hardening), the precise positions, orientations, etc. of the particles will differ for each fabricated object, and are practically impossible to clone or to reproduce. At the same time, said features (positions, orientation, etc.), can be efficiently determined by well-known optical measurement techniques.

It has been known for some time that unique objects can be applied to a number of important security problems [1, 2, 3, 7, 5, 10, 11, 12, 14]. Among them are the copy-safe labeling of banknotes, passports, branded products, bank cards and the like, and the creation of copy protected digital content such as CDs and DVDs. The general idea here is to attach a unique structure as an unreproducible marker or "label" to one of the named items in order to certify its validity or genuineness. Further cryptographic techniques such as digital signatures can be applied [14, 5, 12], which - perhaps surprisingly - allow to test the validity of a marker in an offline process, without the use of a central database.
Please note that apart from being scientifically challenging, the named applications have an extraordinary economic value: The World Economic Forum, Davos, estimates the worldwide damage through product piracy alone to be on the order of 450 billion Dollars, and similar figures have been published by the US Ministry of Trade and the European Union. Unique objects have also to be considered in connection with the labeling problem. The first who considered the application of unique objects in our sense to banknote labeling was probably D. Bauder in the early eighties [1].

After that, a number of publications from Microsoft Research [5, 7, 8, 4, 6] explored other possible physical realisations (including optical and radio wave implementations). They also made contributions on implementation issues and provided some first security analysis.

Two further research highlights, which have both been published in the Nature magazine, include the use of highly complex DNA solutions as unforgeable markers [3], an approach which for some time even was realised in the marketplace [9], and the employment of the reflectivity of paper surfaces [2]. Another, very recent publication is [15].

Proceeding from this related art, the present invention seeks to provide simplified security methods and devices.

This object is achieved by a method having the features of the independent claim. Advantageous embodiments and refinements are specified in claims dependent thereon.

In one embodiment of the method, the response signal comprises a plurality of characteristic resonant optical modes with parameters depend on irregularities of the inner structure. Resonant optical modes generally result in significant and distinguishable features that depend also on irregularities of the inner structure. In comparison to the prior art devices, the characteristic of the response signal can thus be determined relatively easily and are particularly difficult to imitate or fake.

In one embodiment, the characteristic of the response signal includes an actual value and/or the dependency on time and/or the dependency of the challenge signal of at least one parameter of the group comprising spatial distribution frequency, intensity, polarization, line width, Q-factor and direction of radiation. These physical quantities of a resonant optical mode can be determined relatively easy.

In one further embodiment of the method a physical object with an inner structure is used that comprises a photonic crystal with a basic periodic structure that varies with irregularities smaller than the period of the basic periodic structure. In particular, the spatial distribution and the frequency distribution of the resonant optical modes of a photonic crystal can be easily detected with high accuracy.

The method can also include the use of a physical object having an inner structure comprising an optical resonator. This resonator can be formed in a section of the photonic crystal whereas the periodic structure is interrupted. It is also possible to arrange a plurality of optical resonators within the physical structure such that the optical resonators form interacting cavities. Such a structure results also in characteristic resonant optical modes.

The characteristic resonant optical mode may also arise from a plurality of randomly distributed region with induced light emission.

The method is not restricted to photo luminescence but may also use any luminescence effect, wherein the characteristic of the response signal is determined based on a spatial resolution of at least two frequency components of the response signal.

In particular, if single particles are involved in the luminescence the physical object can not be easily reproduced since the spatial distribution of the particles strongly depends on the fabrication process. Furthermore, the luminescence effect may also depend on the spacing between the particles. The characteristic of the response signal can therefore also be determined in the frequencies domain.

The interspace relationship between particles is particularly important if the inner structure comprises particles interacting by energy transfer effects. These energy transfer effects can be a Förster-effect and/or a Dexter-effect.

The inner structure of the physical object may also comprise a network of non-linear electrical components and at least one component arranged for the reception and emission of electromagnetic radiation. The response of such a network depends on small irregularities of the conducting interconnection and non-linear electrical components.

In particular, if the component arranged for the reception and emission of electromagnetic radiation is an antenna for radio wave or micro wave radiation and if the response signal comprises a higher harmonics of the challenge signal the response signal may be affected by small and irreproducible irregularities of the inner structure of the physical object.

The component arranged for the reception and emission of electromagnetic radiation may also be a photodiode that receives an optical challenge signal.

The inner structure of the physical device used for the method may finally also comprise a network of non-linear electrical components and electrical contacts for interaction with the measuring device.

The method may also be used by an authority for assigning a functionality to an remote item by generating a digital signature of an individual description of the object at the remote location based on characteristic of at least one response signal and of an identification of the item using a secret signing key of the authority and by transmitting the digital signature to the remote location of the object. This method has the advantage that the authority can be remote from the actual location of the physical object and the item. These features can be used by a manufacturer for labeling products at a remote location where the products are manufactured. These is particularly useful if so called our production should be inhibited.

The digital signature of the authority can also be combined with a tag issued by a central authority and comprising a digital authorizing signature of an identification of the authority and public key of the authority using a secret signing key of the central authority. Thus, the public key of the authority needs not to be retrieved from a central data base once the assignment of the physical object to the item is validated. This allows efficient label verification is a scenario with many different label manufacturers.

Further advantages and properties of the present invention are disclosed in the following description, in which exemplary embodiments of the present invention are explained in detail based on the drawings:

Figure 1    illustrates a labeling process;

Figure 2    illustrates a further labeling process;

Figure 3    is a functional diagram illustrating the use of a unique object for remote labeling;

Figure 4    shows a banknote provider with a unique object;

Figure 5    shows an identification card provided with the unique object;

Figure 6    illustrates the separation of electron and hole wave function during an applied field in a colloidal nanoheterostructure;

Figure 7    shows the wave function of electrons and holes oftetrapods;

Figure 8    illustrates the energy transfer from an elongated nanocrystal to a dye molecule;

Figure 9    illustrates the coupling between surface plasmons and conjugated polymers;

Figure 10    illustrates the size effects on the surface plasmon absorption of spherical gold nanoparticles;

Figure 11    shows a object comprising a plurality of quantum dots that show an plasmon enhanced photo luminescence;

Figure 12    illustrates spectra of the object from Figure 9;

Figure 13    shows the measured and in the inset the simulated spatial intensity distribu- tion of three cavity modes in a photonic crystal microcavity;

Figure 14    shows a typical cavity mode spectrum;

Figure 15    shows side views on a photonic crystal structure fabricated by various production processes;

Figure 16    illustrates the nano-imprint technique;

Figure 17    shows various periodic structures made of block copolymers by varying the ration of the molecules;

Figure 18    demonstrates the encapsulating of photonic crystal structures;

Figure 19    shows a data carrier provided with a unique object;

Figure 20    shows the structure of an electro-optical unique object based ultra fast photodiodes;

Figure 21    shows a non-linear diode network arrange for operation at high frequencies;

Figure 22    shows a unique surface acoustic wave substrate with a transducer for convenient radio wave read-out.

## 1 Definition of Unique Objects

We will now describe the concept of a unique object in greater detail, starting with some formalism that enables us to talk about measurements and measurement results. We try to strike a balance between strict formality and pragmatism that suits our cause.

### Definition 1.1 (Measuring apparatuses and measurement results)

An apparatus $M$ is called a measuring apparatus for physical objects if it meets the following requirements:

1. $M$ is capable of executing a finite number of measurements $M^1,...,M^n$ on a given physical object.

2. Each measurement $M^i$ can be fully characterized by an associated numerical parameter $p_i$. These parameters are called the measuring parameters of $M$. We use the term $P_M$ to denote the set of all measurement parameters of a measuring apparatus $M$.

3. $M$ has the following functional behavior: Provided with a physical object $O$ and a measuring parameter $p_i$ as input, $M$ executes the measurement $M^i$ characterised by $p_i$ on the object $O$. After that it outputs a numerical measurement result, which we denote

by $M(p_i, O)$ or by $M^O_{p_i}$.

Please note that item 1.1 implicitly assumes that the measurement result is stable for different executions of one measurement.
Since the natural purpose of a measuring apparatus is to determine the "properties" of physical objects, we will say what we understand by this term in the next definition.

### Definition 1.2 (Properties with respect to a measuring apparatus)

Let $M$ be a measuring apparatus, $O$ be a physical object and $p_i$ be a measuring parameter of $M$. Then, the tuple

$$(p_i, M^O_{p_i})$$

is called a property of $O$ with respect to $M$.
The notion of a property now allows us to state when we regard a physical object as unique.

**Definition 1.3 (Unique objects and unique properties)**

Let $M$ be a measuring apparatus and let $O$ be a physical object. $O$ is called a unique object with respect to $M$ if the following holds: There is a relatively small number of properties

$$(p_1, M^O_{p_1}), \ldots, (p_k, M^O_{p_k})$$

of $O$ with respect to $M$ such that it is practically infeasible for any cryptographic adversary, and even for the manufacturer of $O$, to produce another object $O'$ such that

$$M^{O'}_{p_i} = M^O_{p_i} \quad \text{for all } i = 1, \ldots, k.$$

Under these premises, the properties $(p_1, M^O_{p_1}), \ldots, (p_k, M^O_{p_k})$ of $O$ are referred to as unique properties of $O$ with respect to $M$.

**Role of the Involved Constants.**

We remained relatively vague about the terms "practically infeasible" and "relatively small number of properties" in the definition. There are several reasons for this. First of all, what exactly determines a "practical infeasibility" depends very much on the resources that a cryptographic adversary will apply, which, in turn, strongly depend on the protected value and the application scenario. Recall that a fraudster only benefits from his actions whenever his gains exceed his investments. If he is forced to spend more money on cloning a unique object than he gains afterwards, he will be unlikely to proceed. This means that cheap, but moderately hard to fake unique objects have their justification for certain applications.

The expression "relatively small number" of properties is subject to the same restrictions, meaning that it is also application dependent. However, we would like to stipulate as a rule of thumb that the unique properties

$$(p_1, M^O_{p_1}), \ldots, (p_k, M^O_{p_k}),$$

if expressed in binary, should not be longer than 10 $kB$, and will be even shorter in most cases.

**2 Unique Objects and the Labeling Problem**

**2.1 Introduction**

We will now turn to one of the main applications of unique objects. The so-called "labeling problem" consists of designing unforgeable markers for branded products, passports, banknotes, credit cards and the like. These structures shall be attached to the products, banknotes etc. as a proof of their validity, and shall be unforgeable in the sense that no illegitimate production of a valid label is practically feasible. One further important requirement is that it should be possible to test the validity of a given label through an automatized process.

In the following, we use terms like Alice, Bob and Eve. These terms represent functional units that are generally used in cryptography. These terms designate functional units that can be implemented by hardware, by software or by a combination of hard- and software in a single physical unit or can be distributed over various physical units.

**2.2 Labeling with Unique Objects and Central Databases**

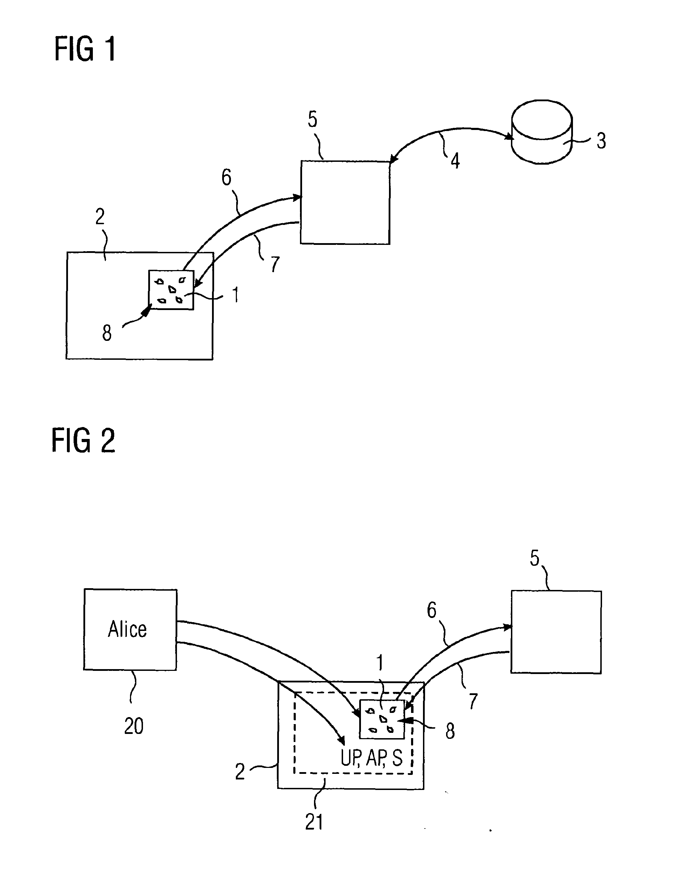

Unique objects are very well applicable to the labeling problem. One suggestive first approach works as illustrated in Figure 1:

- Attach a unique object 1 as a marker to the to-be-labeled item 2, for instance product, passport, bank card, etc. The unique object 1 then represents the label of the item.

- Set up a central database 3, which records the unique properties of all valid labels and which is provided with an online connection 4 with a testing device 5.

- Whenever a given label needs to be tested, the testing device 5 measures the properties of the unique object 1 by applying a challenge signal 6 to the unique object 1 and by receiving a response signal 7 depending on a inner structure 8 of the unique object 1.

  - Then, the testing device 5 contacts the database via an online connection, and asks whether a label with the measured properties is registered as valid in the database 3.

  - If it is registered, then the testing device 5 regards the label as valid, otherwise not.

This process will be most practical in situations where an online connection to some central institution is required anyway whenever a label is tested. Such examples include bank cards of any kind, possibly also access cards and, to some extent, passports.

In other cases, such as banknotes, practicality and privacy issues make the use of online databases more intricate (despite zero-knowledge and secure multiparty computation techniques might be applicable here). Together with the facts that online connections between the database and the testing devices need to be authenticated cryptographically, and that the maintenance of the database requires effort, this makes offline solutions attractive.

### 2.3 Offline Labeling with Unique Objects and Digital Signatures

By the term "offline labeling" we refer to labeling systems whose label verification procedure works without an online connection between the testing apparatuses and a database. The main problem in realizing such a solution is that every unique object is a true unicum, meaning that even all valid labels differ from each other. How shall an offline testing device make a distinction between a valid label and an invalid one under these circumstances? The key idea is to use digital signatures in connection with unique objects as illustrated in Figure 2:

- In order to generate a valid label 22 a functional unit 21 designated Alice generates the unique object with unique properties

$$UP = (p_1, M^O_{p_1}), \ldots, (p_k, M^O_{p_k}).$$

- Then, Alice creates a digital Signature S with

$$S = Sig_{SK_A}((p_1, M^O_{p_1}), \ldots, (p_k, M^O_{p_k}), AI),$$

where *AI* is some additional information related to the to-be-labeled item, for example the branded product, the passport, etc., and $SK_A$ is the secret cryptographic key of Alice.

- The label 22, then, consists of the unique physical object *O*, the numerical strings *UP*, *AI*, and *S*. These need to be attached to or stored on the to-be-labeled item 2. While the object 1 can in most cases be attached or glued upon the item 2, said numerical strings can be stored via a two-dimensional barcode, an RFID chips or comparable techniques on the item 1.

In order to test the label 22 of the described form, a testing device 23 requires the public cryptographic key $PK_A$ associated to Alice. Under that provision, the testing device 23 can test a given label 22 consisting of a physical object *O'* and numerical information *UP*, *AI*, *S*, as follows:

- The testing device 23 reads the strings *UP*, *AI* and *S* from the label 21 or the item 2, respectively, where they had been stored by a barcode, an RFID-like techniques, or other means.

- The testing device 23 checks the digital signature S for validity by use of the key $PK_A$.

- The testing device 23 physically measures the properties

$$M^{O'}_{p_i} \qquad \text{for all } i = 1, \ldots, k$$

of the unique object *O'* that is part of the label 22. Then, the testing device 23 checks if these properties match the unique properties *UP* that it read in step 1. In other words, it checks if

$$M^{O'}_{p_i} = M^O_{p_i} \qquad \text{for all } i = 1, \ldots, k.$$

- The testing device 23 considers the label as valid if and only if both checks have been successful.

Please note that the testing procedure does not require online connections or any central databases. Furthermore, it works without any secret keys stored in the testing devices. This is a huge asset whenever these devices are widespread, or are issued to many persons, such as in the typical credit card setting, or in conceivable scenarios where citizens can check the validity of banknotes in an automatized fashion by small handheld devices, for example via their mobile phones.

### 2.4 Remote Generation of Labels with Digital Signatures

What do we mean by the term "remote generation of a label"?

In section 2.3, we assumed that the person holding the unique object also was in possession of the secret key $SK_A$, and could generate the label by himself, without external assistance. This is not necessarily so: In certain settings it may be useful that the key and the object are held by two different entities, which have to cooperate in order to generate a label.

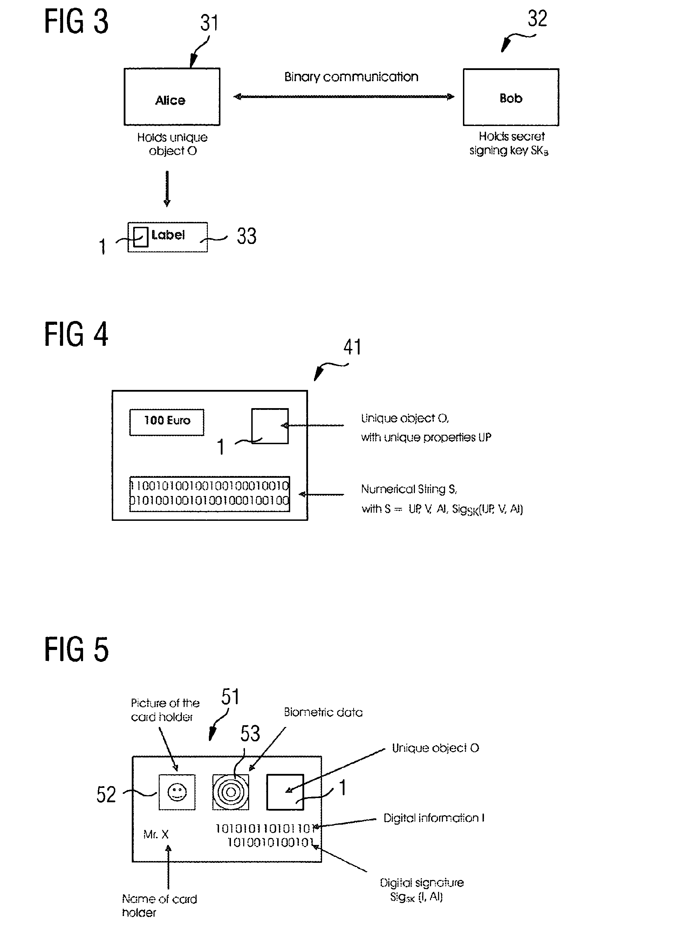

Figure 3 illustrates the situation. Suppose that a functional unit 31 designated Alice holds the unique object *O* with unique properties *UP*, a functional unit 32 designated Bob holds a secret key $SK_B$, and that both are located separately from each other and can communicate via a binary channel 33. Now we can ask whether there is a communication protocol with the following properties:

1. If both parties follow the protocol, then Alice is able to generate a valid label 34 consisting of the object *O* and the numerical information *UP, AI, S.*

2. Even if Alice deviates maliciously from the protocol, she will be unable to generate more than one label 34 during or after the protocol.

We call a protocol which meets these properties a remote generation of the label 34. The following procedure allows such a remote generation of the labels 34:

1. Alice sends the unique properties *UP* of her object *O* and the additional information *AI* to Bob.

- Alternatively, Bob may already hold the information *AI* at the beginning of the protocol, or may form the information *AI* signed in step 3 by himself, as a function of the data that he receives from Alice and that he holds himself.

2. Bob convinces himself of the fact that the properties that he received are non-trivial, and that they may correspond to a real unique object. He can do so by comparing the data that he received with some pre-defined format or threshold. He aborts the protocol if he finds the data unsuitable.

3. Bob returns the signature

$$S = Sig_{SK_B}(UP, AI)$$

to Alice.

4. Alice forms the valid label 34 consisting of the unique physical object *O* and the numerical information *UP, AI, S.*

**Comments.**

Please note that step 2, where Bob performs some check on the data that he is going to sign, can be necessary because Alice could otherwise send some bogus information that refers to the features of an easily reproducible or trivial object. Let us give an example to illustrate the point. Suppose that the unique object 1 is a random distribution of optically active nanoparticles in a suitable matrix. The unique properties of such an object 1 could consist of the precise location and size of some of the nanoparticles. Now it is conceivable to find some trivial arrangements (for example, no nanoparticles contained at all; or all particles concentrated tightly in one small area) which a faker can reproduce. Bob must convince himself that the data he signs does not refer to such a trivial and reproducible arrangement. In the described example, this step might consist of verifying that the locations and sizes of the particles are uniformly or Gaussian distributed. Generally, the procedure Bob is going to apply depends on the precise nature of the employed unique objects.

In other situations, however, step2 can be superfluous and can be left away.

Please note further that we assumed that the communication channel between Alice and Bob is authenticated. If it is not, then both can take standard measured (see [33, 21]) to achieve authenticity. Furthermore, the communication between Alice and Bob can be encrypted if required (see, again, [33, 21]).

The remote generation of the labels 34 is a very relevant technique that can enhance both security and practicality in many scenarios, as we will see over the next sections.

**2.5 Multi-User Setting**

If labels from more than one generating institution shall be tested, such as in a typical consumer product scenario with different manufacturers, then we have at least three basic possibilities to achieve this goal:

**Possibility 1:** The testing devices need to store the public keys of all possible manufacturers. Besides the high storage requirements, this has another disadvantage: It is difficult for new manufacturers to enter the system once a large number of testing devices has been set up and distributed. Since they are offline, the new keys have to be entered manually, with suitable security procedures by authorised personnel.

**Possibility 2:** A central institution is established with a central, secret signing key $SK_{CI}$. This institution can sign so-called (numerical) "tags" for each legitimate label generator. A (numerical) tag $T_G$ of some label generator *G* could have the form

$$T_G = ID_G, PK_G, Sig_{SK_{CI}}(ID_G, PK_G),$$

where $ID_G$ is a string that suitably describes the identity of the label generator, and $PK_G$ is the public key that corresponds to the secret key $SK_G$ of the label generator *G* . The tags may further include expiration dates and other data, signed or unsigned.

Each label generator *G* includes his numerical tag $T_G$ into the numerical information of all labels that he generates. If a testing device is presented with a numerical tag $T_G$ and a standard label consisting of *O* and *UP,AI*, $Sig_{SK_G}(UP,AI)$, it first of all checks the validity of the tag by verifying the signature $Sig_{SK_{CI}}$ $(ID_G, PK_G)$ included in the tag. If this signature is valid, the testing device knows that it should use the key $PK_G$ in order to check the validity of the label, *viz.* of the second signature $S=Sig_{SK_G}(UP,AI)$. Please note that the use of tags only requires the testing devices to store the single key $PK_{CI}$ in order to verify labels from all manufacturers.

**Possibility 3:** An identity-based signature scheme is used [17]. Structurally, this turns out to be almost equivalent to the tag solution presented in the last item.

These solutions are secure, but in a consumer market scenario with many label generators, they have one disadvantage. If one of the label generators loses its key (for example through a hacker break-in or simple theft), then this key must be revoked from all testing devices. Otherwise, the hackers can use this key in order to commit fraud, and insert faked specimen into the circulation of goods. Such revocation can both be difficult to realize and expensive, especially if the testing devices are widespread and offline. One possible approach to circumvent this problem is based on the remote generation of labels, and can be described as follows.

**Possibility 4:** Set up one central institution *CI* which possesses a secret signing key $SK_{CI}'$ and which generates the labels for all manufacturers remotely, as described in section 3.4. Here, each manufacturer must hold sufficiently many unique objects at his site, and the manufacturers must maintain authenticated online connections with the central institution.

The advantage of possibility 4 is that this setting can react easily to possible changes regarding the manufacturers, for example if new manufacturers arise, or old manufacturers want to leave the system or go bankrupt.

### 2.6 Application Scenarios

Let us now discuss some concrete application scenarios. In our description, we will also compare the suitability of the three different implementation techniques named so far (labeling with central databases, labeling with digital signatures, and the remote generation of labels) with hindsight to the respective application.

### Banknotes

In the labeling of banknotes, the additional information *AI* may typically include the value and a serial number of the banknote, possibly also the place and date of fabrication. Apart from that, the general scheme remains as described in section 2.3.

Figure 4 shows a labeled banknote 41. The string V gives the value of the note 41, while AI may contain additional information such as banknote number, fabrication site, fabrication date, etc.

The remote generation of labels of section 2.4 can be particularly helpful in banknote labeling. Consider the typical scenario in which the notes 41 are printed at a number of different decentral sites. In such a setting, the concern of the headquarters would be to prevent unauthorized fabrication at the sites, and to rule out that fraudsters could steal the secret keys from the sites. Both problems can be encountered by remotely generating the necessary labels between the headquarters and sites as described in section 2.4.

### ID Cards, Passports, Access Cards

Here, the additional information *AI* may include personal data such as name, address, date of birth, and also biometrics such as fingerprint or iris data. These biometrics can be checked with the card or passport holder in addition to the genuineness of the label, which will enhance the security of the scheme.

Figure 5 shows an identity card 51. The identity card 51 is provided with the unique object 1 and may also be provided with a picture 52 of the card holder, biometric data 53 plus additional information 54 such as the name of the card holder printed in alphanumerical signs, a digital information string *I* or a digital signature $Sig_{sK(I, AI)}$. The string *I* may contain any data regarding the card owner, including a full binary description of the picture or the biometric data. Alternatively, hash values of these numerical values may be used. *AI* may be any additional side information that is only included in the signature, but not stored publicly on the card.

Again, one can imagine to employ a remote generation of the labels, as described in section 2.4. This allows the decentral generation of passports or ID cards at local authorities, which could considerably speed up the issuing of passports. Also access cards can be issued decentrally and more conveniently through that scheme.

Passports also fit relatively well with central databases and online checking, since the police or customs authorities may well have implemented authenticated connections to a central headquarter. Other potential verifiers of passports (hotels, banks, etc.) probably would need to check via a digital signature that would be included in the label, according to section 2.3.

Access cards also often allow the use of central databases, since the entry in security zones may need to be registered centrally anyway. If privacy is required, then digital signatures and offline validation or central database with zero-knowledge and secure multiparty computation techniques can be employed.

### Permission Tokens

Let us now discuss one particular concept which we call a permission token. Consider a situation where a customer wants to acquire concert tickets over the internet. One would like to avoid sending out the tickets via postal delivery after the purchase, since it is tedious and creates extra costs. Instead, it would be convenient if the customer could print out tickets by himself. As long as only digital information is sent over an insecure connection from the concert agency to the customer to that aim, however, an eavesdropper can just as well print out the tickets. Furthermore, the customer might print out the tickets multiple times.

Our techniques allow a very direct solution to that problem. Suppose that the customer holds a unique object. Then, he can send its unique properties $UP$ to the concert agency, which returns a signature of the unique properties and some additional information which may contain the concert date, seat number, etc. The customer can print out that information in a machine readable form, or store it in some other way (e.g. on an RFID chip, via printed barcodes, etc.). The unique object $O$, the unique properties $UP$, the information $AI$, and the signature $Sig_{SK_{CA}}(UP,AI)$ then form a "permission token" that the customer can bring with him in order to gain access to the concert. The process of generating this permission token basically follows the remote generation of labels of section 2.4.

Please note that this scheme can be generalized in order to distribute permission tokens of any kind over public channels. Another example would be permission tokens that allow you to collect postal packages from locked, automatized parcel deposit boxes.

The main advantage of the scheme is its cost effectiveness. If an equivalent scheme was to be realized via classical mathematical means, then a secret key - public key pair needed to be stored on a smart card. This makes the cost per card or per permission token significantly higher than in our case. Another advantage is that storing a secret key on a smart card rises extra security issues, while our scheme works without any secret keys on the permission tokens.

**Bankcards, including EC Cards and Credit Cards**

In this case, the additional information typically would include customer data, expiration dates, and similar data, and could also contain biometrics such as fingerprints, iris scans or the like. Again, the remote generation of labels allows the issuing of the cards at decentral branches. Bank cards also allow the favorable use of central databases, since the account data needs to be checked before any payment anyway. The use of digital signatures can maintain anonymity, for example in case of money cards. On the issuing of the cards, the original signature can be created as a blind signature [20].

If PINs are used in connection with such bankcards, then an ideal system arises where the ability to make payments requires something that you have (the card), something that you know (the PIN), and something that you are (the biometrics). For further explanations on this threefold distinction see, for example, [21]).

**Branded Products**

The secure labeling of branded products differs from the above scenarios, since we need to deal with a very large number of manufacturers that fabricate products and which, thus, need to generate valid labels. At the same time, the setting requires that the labels from all manufacturers can be verified by one type of testing device, for example in a supermarket, in pharmacies, or along supply chains. This suggests to use either only databases, or one of the techniques described in section 2.5 (many stored keys, tags, ID-based signatures, remote generation of labels). In particular, the remote generation of labels seems to be a very elegant solution to the problem.

**3 Unique Objects and Copy-protected Digital Content**

**3.1 Introduction**

We will now discuss how unique objects can be applied to create representations of digital content that resist illegitimate duplication. Please note in this context that standard binary techniques such as digital watermarks per se do not prevent copying, but only ex post allow to identify the entity that created a content. This property of a digital watermark can in principle be used to prevent illegitimate duplication, but only under the assumption that any copying attempts take place in environments which have some copy control mechanisms implemented. Examples include trusted software or hardware platforms that forbid any duplication of watermarked content. If a fraudster is able to create his own environment, for example a manipulated operating system or a purpose built read and write hardware device, then digital watermarks are useless: The fraudster can copy the content bit by bit, including the watermark, with all copies being indistinguishable from the original, and then go on to sell this content, for example CDs or DVDs. While such attacks may be without the reach of the average user, they pose no problem for educated pirates.

This motivates the search for copy protection systems that also resists attacks by educated adversaries. The difficulty here is that any bitstring representing some digital content can in principle be duplicated at will. This suggests to link a physically unique and non-reproducible physical object to the trivially reproducible bitstring.

**3.2 Unique Objects and Copy-Protected Content**

A copy-protection system that incorporates unique objects can be built right on the techniques that we have presented in section 2.3. It would work in the following fashion:

1. First of all, we stipulate that any legitimate representation of some digital content $I$ must consist of a unique physical object $O$, the numerical expression $UP$ of the unique properties of $O$, some additional information $AI$ and a digital signature $Sig_{SK_P}(UP,AI,I)$ of the issuer of the digital content. Thereby $SK_P$ is the secret key of the provider $P$ of the digital content.

2. In order to check whether a given representation of digital content is a legitimate representation, any playing device needs to execute the following steps:

- The playing device checks the validity of the digital signature by use of the public key $PK_P$ that is associated with the content provider $P$.

- The playing device checks if the object $O$ indeed possesses the unique properties $UP$.

3. The playing device plays the content if and only if both checks have been positive.

Please note that the role of the unique object can at times also be played by the storage medium that stores the digital content, such as the CD or DVD itself. These media may either have unique properties right from the start, or can intentionally be manufactured to have unique features. One possibility is, for example, to distribute light scattering particles (for example gold or silver nanoparticles) randomly on the surface of a CD or DVD.

### 3.3 Remote Generation of Copy-Protected Content

Also the generation of copy-protected content can be executed in a remote fashion between one party that holds the unique object and another party that holds the secret signing key. The procedure is basically the same as in the remote generation of labels described in section 3.4. Presuming that Alice holds a unique object or unique storage medium $O$ with unique properties $UP$ , and that Bob holds a secret key $SK_B$, they can proceed as follows.

1. Alice sends the unique properties $UP$ of the unique storage medium $O$ she holds, to Bob.

2. Bob convinces himself of the fact that the properties that he received are non-trivial, and that any object which possesses these properties are, in fact, unreproducible.

3. Bob returns the signature

$$S=Sig_{SK_B}(UP,AI,C).$$

Thereby $AI$ denotes some additional information that Bob may include, and $C$ denotes the digital content that shall be issued in a copy-protected form.

4. Alice forms a valid representation of the content $C$ consisting of $O$ and $UP$, $AI$, $C$, $S$.

Please note that the protocol leaves open whether Alice receives $C$ directly from Bob, or whether she obtained it from some other source. Both possibilities are conceivable. As in section 2.4, step 2 is necessary, since Alice could otherwise send some bogus information that refers to the features of an easily reproducible or trivial object.

### 3.4 Multi-User Setting

Basically the same considerations as in section 2.5 also apply in the context of copy protected content. Suppose that more than one content providers want to be able to generate legitimate representations of content in the sense of section 4.2. Then, as in section 3.5, we have the following basic possibilities.

**Possibility 1:** The playing devices need to store the public keys of all possible content providers. Besides the storage requirements, this has another disadvantage: It is difficult for new content providers to enter the system once a large number of offline playing devices has been set up and distributed.

**Possibility 2:** A central institution is established with a central, secret signing key $SK_{CI}$. This institution can sign so-called "tags" for each legitimate content provider. A tag $T$ of some label generator G could have the form

$$T=ID_G,PK_G,Sig_{SK_{CI}}(ID_G,PK_G),$$

where $ID_G$ is a string that suitably describes the identity of the label generator, and $PK_G$ is the public key of the label generator.

These tags are included in the labels. If a playing device is presented with a tag $T$ and a standard label consisting of $O$ and $UP,AI,Sig_{SK_G}(UP,AI)$, it first of all checks the validity of the signature $Sig_{SK_{CI}}(ID_G,PK_G)$ that is part of the tag. If this signature is valid, the playing device knows that it should use the key $PK_G$ in order to check the validity of the label, *viz.* of the signature $S=Sig_{SK_G}(UP,AI)$.
The described procedure only requires the playing device to store the single key $PK_{CI}$ in order to be able to verify the validity of labels from all manufacturers.

**Possibility 3:** An identity-based signature scheme is used [17]. Structurally, this turns out to be almost equivalent to the tag solution presented in the last item.

These solutions are secure, but in a practical scenario with many content providers, they have one potential disadvantage. If one of the content providers loses its key (for example through a hacker break-in or simple theft), then this key must be revoked from all playing devices. Otherwise, the hackers can insert illegitimate copies into the circulation of contents. Such revocation can be difficult to realize, however, if the playing devices are widespread and offline. One possible approach that can circumvent this problem can be based on the remote generation of copy protected content, and can be described as follows.

**Possibility 4:** Set up a central institution *CI* which possesses a secret signing key $SK_{CI}$ and which generates legitimate representations of content with all content providers remotely as described in section 3.3. This presumes that each content provider holds sufficiently many unique objects or unique storage media at his site, and that the content providers maintain authenticated online connections with the central institution.

The advantage of possibility 4 is that it can be adjusted easily to occurring changes regarding the content providers. If new providers arise, or old providers want to leave the system or go bankrupt, the system can be adjusted very easily, since key revocation from the playing devices is unnecessary.

### 3.5 Application Scenarios

We can probably cut ourselves short on the application side, since it should be relatively clear from what we have said so far. The main applications of the presented techniques are the copy protection of any digital content such as video and audio material, computer programs, or any other sort of digital data.

Please note, however, that the presented technique is only applicable when the reading or playing devices can execute an analogue measurement on the unique object that is part of the representation of the copy protected content. This certainly holds for CDs and DVDs, since the player reads out the storage medium in an analogue optical fashion. It may or may not hold for storage media like USB sticks and hard disks, since they may read out the digital content by themselves, and may pass on the content in a binary format to the reading (meta-)device, for example the computer system. This strongly depends on the specific situation and application.

### 4 Physical Realization of Unique Objects

Let us now turn to some advantageous physical realization of unique objects, which will be discussed over the next sections.

### 4.1 Random 2D or 3D Distributions of Optically Active Particles

#### 4.1.1 Introduction and Overview

One possible embodiment of unique objects consists in a random distribution of optically active particles (dyemolecules, quantum dots, colourcenters) in a suitable matrix (thin polymer film, small optically active crystal, etc.). Such a system would contain information in the form of spatial position and orientation of particles, spectral properties of particles, time dependent optical behavior (e.g. decay times). In addition all of the above properties of a given particle can be influenced significantly by interaction with one or more of the other particles present in the system. Furthermore, the optical properties of the object can be influenced reversibly or irreversibly by external parameters such as electrical field, magnetic field, temperature or light intensity.

For the present application it is of particular importance that the location, correlation and physical properties of the particles can be prepared in a sufficiently random fashion, so that the particle system will be difficult to clone or reproduce. Furthermore, the unique properties of the object can be read out in a rather simple, reliable, inexpensive and time efficient manner.

#### 4.1.2 Physical Principles

The physical principle behind the object as described above lies in the influence of a matrix on the specific properties of an optically active particle in this matrix. The matrix provides protection of the particle against undesired external influences and fixes the relative spatial positions and orientations of the particles. The basic physical quantity to be detected is the spatially resolved (point of origin and spatial angles of the response) and temporally resolved (e.g. decay times, characteristic time variations of the signal) optical response (luminescence, fluorescence, phosphorescence) to a continuous wave optical excitation or short laser pulses with different frequencies, intensities, polarizations, duration, coordinates of incidence, laser spot diameter and shape, and direction of the laser beam. This optical response contains the individual spectral characteristics of each particle, the intensity or quantum efficiency, saturation effects, decay times, statistical on/off "blinking", polarization, polarization memory, temperature and field dependence. All of these properties in principle will be influenced by spatial correlations between particles with different properties (quenching, Förster transfer, Dexter transfer, change of polarization properties etc.) which depend strongly on the relative distance between two or more particles as well as on their individual optical properties, their position and orientation in the matrix, and the properties of the matrix.

All of the above properties can be detected with standard optical spectroscopy methods, if needed with single photon sensitivity and high spatial, spectral and temporal resolution as defined by the present state of the art in optical spectroscopy.

### 4.1.3 Embodiments

We will now present several concrete implementations, moving from more general to more specific embodiments. Please note the dominant role that energy transfer phenomena play in several of the embodiments.

### Embodiment 1:

One embodiment which can be realized with inexpensive starting material and which would hence be suitable for mass production consists of silicon nanoparticles of different size and shape within a transparent polymer matrix. The precursor polymers and particles can be prepared in the form of a liquid suspension which is then transformed into a thin film on substrate by conventional printing and/or spin coating techniques. Physical variables are the optical properties of the polymer matrix (e.g. homogeneous polymers, mixed polymers, polymer blends, etc.) as well as the size and shape distribution, surface termination and concentration of the particles. In addition, the silicon particles which usually are non-luminescent because of surface defects and/or the indirect nature of the band structure, can be transformed into well-known form of highly luminescent porous silicon by suitable methods such as stain etching. These two forms of silicon particles thus differ in a large number of the physical properties mentioned in the previous section, as described in the extensive literature on that subject. Finally, the silicon particles can be combined with other optically active nano-particles such as other semiconductor quantum dots, organic dye molecules (with singlet or triplet excited states) or metallic nano-particles with particular plasmonic properties.

### Embodiment 2:

A second embodiment are organic dyes in a similar matrix.

### Embodiment 3:

A third embodiment are solid state host crystals or disordered thin solid films with a specific bandgap containing optically active inclusion such as precipitates, radiation defects, luminescence centers, dopants, or color centers. A suitable way of random production of such matrix particle systems consists of multiple energy and dose ion implantation (with or without implantation masks), high energy particle irradiation or conventional doping. If needed, the specific properties of such systems can also be further influenced by subsequent thermal treatment.

### Embodiment 4: Elongated Nanoparticles and Influencing Emission Characteristics by an Electrical Field

By applying an electrical field through a semitransparent contact the fluorescent behavior of, for example, elongated core- shell- nanoparticles can be varied. The nanoparticles are embedded in a matrix, and depending on their orientation their fluorescence is reduced by the electrical field.

This effect occurs due to the spatial separation between electrons and holes in an elongated nanoparticle which is oriented in parallel to the electrical field. Through employment of nanoparticles with a core consisting of a semiconductor with a small bandgap, at which a nanorod with a larger bandgap has been grown, the overlap of the electron and hole wave function can be reduced even further in an electrical field.

For our purpose, utilizing the influence of an electrical field has got the advantage that it allows the measurement of further hard-to-reproduce and unique characteristics of the structures. In particular, the dependency of the generated effects on particle characteristics such as orientation and internal configuration is very useful for us.

Change of the optical behavior of a particle in an electrical field, for instance the Stark effect, can also be observed for non-elongated particles.

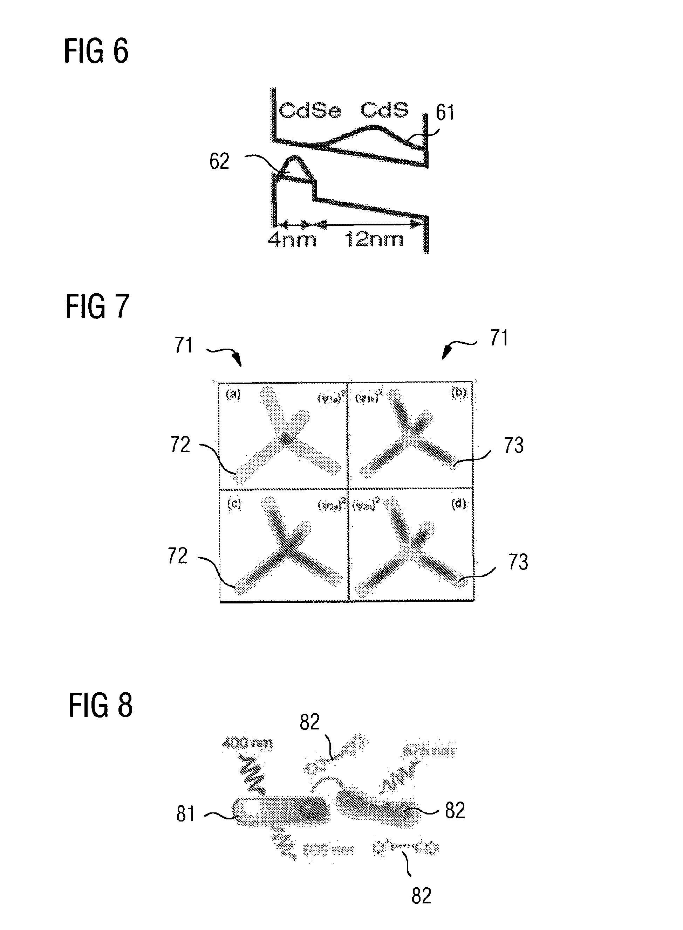

Figure 8 illustrates the separation of an electron wave function 61 and a hole wave function 62 during an applied field in a colloidal nanoheterostructure with a length of 16 nm [51].

### Embodiment 5: Energy Transfer in Three Dimensions

By using semiconductor nanoparticle tetrapods, at whose ends for example a dye has been attached or a semiconductor material with a different band gap has been grown, one may obtain a complex spatial object. The fluorescent behavior of the four dyes then depends on their relative position to each other. If the dyes show different absorption and emission behavior, a complex Förster Transfer arises between the single fluorescence centers. Through imperfections and variations in the production process, for example different mutual distances of the fluorescence centers, the complexity of the fluorescent behavior and thereby the security against counterfeiting is further increased. These imperfections or variations may also be induced by attaching the dyes or nanoparticles to the end of the tetrapods by linkers of different length or structure. Upon encapsulation in a suitable polymer matrix, the linkers will take different and essentially random spatial positions and angles, which will subsequently be fixed in the matrix and infeasible to reproduce.

Figure 7 shows tetrapods 71 with calculated electron wave functions 72 and hole wave funtions 73 [52].

Figure 8 illustrates an energy transfer from an elongated nanocrystal 81 to a dye molecule 82 [53].

## Embodiment 6: Cluster from Metall-Nanorods in a Fluorescent Matrix, and Measurement of the Polarization Dependent Emission Enhancement through Plasmons

Metal cluster in a fluorescent matrix from semiconductor particles or dyes can, at certain excitation frequencies, increase the fluorescence of the matrix in the direct vicinity of the metal cluster. Through employment of geometrically complex geometric cluster of metal nanorods and single metal nanorods, the fluorescence amplification can be made polarization dependent. Due to the very quick reactivity of the matrix on changes of polarizations, a possible detection of the excitation signal and an artificial generation of the desired pattern by an LCD array or similar means should only be possible at much slower timescales. This can distinguish a counterfeited structure from the original and detect fraud.

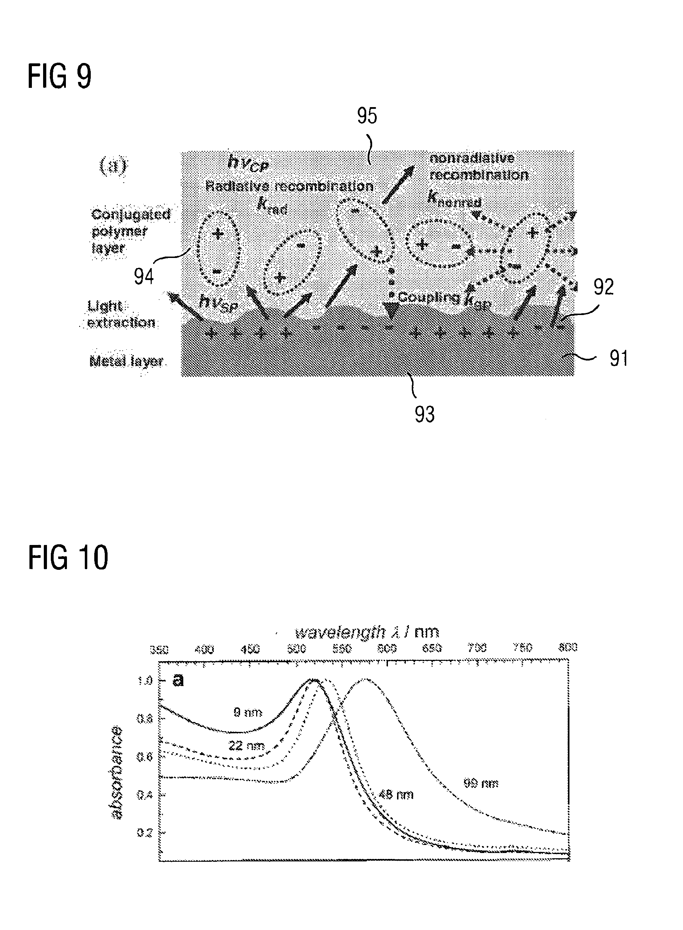

Figure 9 illustrates the coupling between surface plasmons 91 on a surface 92 of a metallic layer 93 and conjugated polymers 94 of a polymer layer 95 deposited on the metallic layer 93 [54].

## Embodiment 7: Metal Nanoparticles and Measurement of the Plasmon Resonance

The plasmonic resonances of metal nanoparticles can be detected and used as a unique feature as well. The advantage over semiconducor nanoparticles is the absence of blinking effects. The detection of the plasmonic resonance and therefore the read out is enabled in shorter time. The plasmonic resonance is influenced by size, materials (e.g. certain gold-silver-alloys) and by the dieletric constant of the environment. Through elongated metal particles and particle clusters again some polarization dependency can be introduced to the object, further increasing its security against counterfeiting.

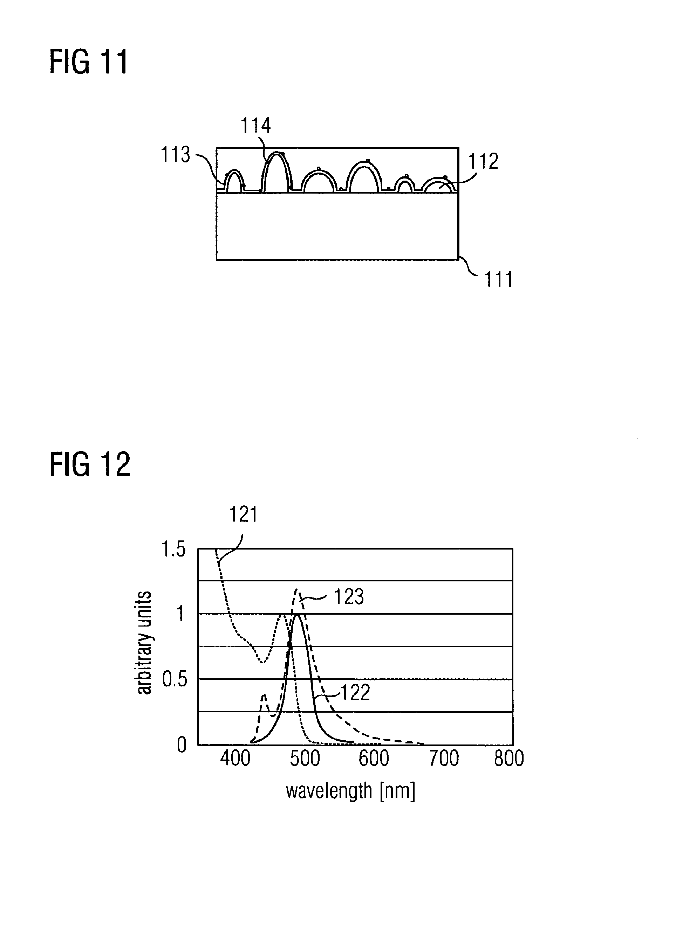

Figure 12 illustrates the size effects on the surface plasmon absorption of spherical gold nanoparticles with sizes between 9 nm till 99 nm [55].

## Embodiment 8: Particle Plasmon enhanced Photoluminescence of Semiconductor Quantum Dots.

Figure 11 shows a composite object with a special silica substrate 111 on which silver islands 112 are formed. The silver islands 112 are covered by a silica layer 113 on which quantum dots made from CdSe/ZnS are formed. The silica layer 113 and the quantum dots 114 are covered by a protective cover 115 that is made of acrylic glass.

The silver islands on the silica substrate form at low evaporation rates and a layer thickness around 10 nm. In this case, more or less spherical silver islands form on the substrate. They typically have a diameter between 10 to 15 nm and a thickness between 10 and 18 nm. The spaces between the silver islands 112 can vary between a few nm to 100 nm and are free from silver. For making the size distribution of the silver islands 112 more homogeneous, a rapid thermal annealing process is conducted at temperatures around 250 °C resulting in restructuring of the silver island 112. Smaller silver islands 112 dissolve and their material is accumulating on the larger silver islands 112 which also become higher. Furthermore, the spaces between the silver islands 112 are increasing. After silver islands 112 have reached their appropriate sizes, the silica layer 113 is deposited on the probe by a sputtering process resulting in a silica layer 113 with a thickness greater than 100 nm. After the sputtering process has been finished, the quantum dots 114 are distributed over the silica layer 113 by using a toluol solution, in which the quantum dots are solved. After the quantum dots are distributed over the silica layer 113 the whole structure is sealed by the protective cover 115 to prevent the quantum dots from oxidation.

The unique object 1 depicted in figure 11 uses the so called effective Purcell-effect. A free quantum dot 114 absorbs light below a particular wave length that corresponds to the energy gap of its first band transition. By the absorption of light at a particular energy, electron-hole-pairs, so called exitones, are formed. The exitones can recombine thereby emit light that has a greater wave length than the light absorbed previously. The recombination rate of the exitones is considerably shortened if the quantum dots 114 are exposed to a strong electric field, thus enhancing the photo luminescence of the quantum dots 114.

The strong electric field is generated by particle plasmons on the silver islands 112. The particle plasmons are excited by incident light and form electrical dipole fields that are significantly stronger than the field of the exciting photons. The strength of the field is strongest in the vicinity of the silver islands 112 and decreases with increasing distance from the silver islands 112.

The plasmons may be excited directly by light whose frequency fits to the resonance frequency of the plasmons. The other possibility is to excite the quantum dots 114 which absorb light at shorter wavelengths and emit the light at longer wavelengths. The silver island 112 are now grown such and covered such with $SiO_2$ that the resulting plasmon resonance also covers the emission wavelength of the quantum dots 114. Thus, a part of the light emitted by the quantum dots 114 is used for exciting the plasmons and generates the electrical field. The relative position of the spectra is shown in Figure 12, where an absorption characteristic 121 and an emission characteristic 122 of the quantum dots 114 is shown. Figure 12 further shows the plasmon resonance 123 that is situated in the region of the emission characteristic 122 of the quantum dots. 114.

It should be noted that there are also parallel processes. For instance, the plasmons may also decay by emitting light into free space where the light emitted by the plasmons is detected besides the light emitted by the quantum dots 114, or the plasmon may loose their energy in collision processes with the lattice and are converted into phonons, in particular, heating. The exitones can also decay without the emission of photons. These other possibilities become more dominant if the distance between the quantum dots 114 and the silver islands 112 becomes too small. Then, the photo luminescence is rather damped than enhanced.

If the wavelength of the instant light is too long, the incident light will result in the excitation of plasmon in the silver islands 112 besides the excitation of excitons in the quantum dots 114.

If the population rate of the plasmon modes due to the coupling between the exitons of the quantum dots 114 and the plasmons of the silver islands 112 is more efficient than the decay rate of the plasmons, then the population of the plasmon modes increases rapidly and a SPASER (= Surface Plasmon Amplification by Stimulated Emission of Radiation) results. However, this is quite unlikely in the present structure.

Another effect is caused by so called plasmonic lenses that refer to the amplification of electric fields in the space between silver islands 112. These plasmonic lenses are sometimes also called hot spots. In addition, the resonance frequency of the plasmons changes if the distance between the silver islands 112 decreases. On the one hand, the coupling between the plasmons of adjacent silver islands 112 may results in low energy levels of a joined plasmon and therefore causes a red shift of the resonance frequency. Also higher energy levels of a joined plasmon can result. If these higher energy levels are populated the electric fields between the silver islands 112 are not enhanced since the electric fields cancel each other instead of adding to a electric field with a higher field strength. The enhancement of the electrical field between the silver particles is, however, more likely because the enhancement of the electrical field between the silver islands 112 relates to the low energy level that are more likely to be populated.

Another effect is the polarization dependency of the interaction between the silver islands 112. If the light is linearly polarized parallel to axis connecting the silver island 112 the electrical field between the silver islands 112 is enhanced. The system of the silver islands 112, however, reacts only weakly with respect to light that is linearly polarized and assumes a right angle with respect to the axis connecting the silver islands 112. These polarization dependency is also important for none-spherical particles.

For validating the unique object from Figure 11 the unique object 1 from Figure 11 is irradiated by laser light whose wavelength is well below the resonance frequency of the plasmons and that pumps the quantum dots 114 efficiently. The laser light originates from a laser which is operated in the continuous wave mode so that the enhancement of the photoluminescence can be optimally used. In such a mode, also the interaction between the silver islands 112 becomes important.

The emitted light of the unique object 1 from figure 11 is detected after the light from the unique object has passed a band pass filter for illuminating the light from the laser. As detector, a CCD-camera with a spatial resolution of $1\,\mu m$ can be used.

The only parameter that is measured is the photo luminescence intensity of each square micrometer of the unique object 1 from figure 11. Additional parameters are the dependency of the intensity, the polarization and the direction of the incident light. The response signal is received nearly instantaneously on a time scale of 10 ns.

**Embodiment 9: Metallised Nanoparticle Arrays**

Metallic (e.g. silver or gold) nanoparticle arrays and metallic nanoparticle blends (even in 3D) may also be used as unique objects.

Surface plasmon excitations on each metallic nanoparticle couple to adjacent particles, provided that their physical separation (distance) is far below the wavelength of the plasmon mode. Light propagation then proceeds via a complex percolation path through the material and the spatial distribution of the intensities would be very sensitive to the point of incidence of or other characteristics of the laser beam (e.g. polarization, intensity, etc.) and on the physical properties of the system (particle size, shape, distribution, material, etc.). Furthermore, the metallic nanoparticles could be functionalized with luminescent marker molecules. The luminescence of the marker molecules would then be strongly sensitive to the local environment, the local distribution and characteristics of the neighbouring nanoparticles.

The interparticle optical coupling and interactions are very strong and non-linear functions of their separation distance and shape and composition, making the optical properties of each subsystem different, unique and hard to reproduce. Furthermore, functionalizing the surface of the nanoparticles with luminescent markers would enhance the optical nonlinearities.

The lifetime of the functionalised surfaces would depend strongly on the local proximity of the nanoparticles and would constitute another favourable unique feature of the proposed system.

Another favourable feature is that the interactions occur at ultrafast timescales, making it impossible for an attacker/a faker to artificially synthesize the desired signals with optoelectronic components over comparatively fast timescales.

Yet another favourable unique feature is the small physical size of the nanoparticles, which is typically on the sub-50-nm-lengthscale, comparable to the maximal resolution afforded by available lithographic techniques, making refabrication impossible. Furthermore, the separation of the particles would typically on the order of sub-10-nm, and the physical effects utilized (like Förster transfers, surface enhanced Raman scattering, etc.) vary, even on the subnanometer scale.

Compared with inorganic semiconductors, the energy dissipation of such nanoscale systems is predominantly radiative, facilitating operation at room temperatures.

In general, the physical effects that are exploited in this suggested system are the Anderson localisation of light and the percolation propagation of light, plasmonic resonances, Förster resonant energy transfer, Drexhage and Purcell modification of the spontaneous emission dynamics and coherent light scattering in random optical media.

Form a blend of nanoparticles with a well defined size and shape distribution and encapsulate it in a matrix stabilising it. In addition to that, the whole could be prepared on a chip with fixed input and output optical waveguides, providing a simple and stable way to interrogate the structure.

As a measurement method, direct and laser excitation can be used. Variable parameters would be frequency, intensity, point and angle of incidence, pulse duration, polarization, etc.

Functionalising the nanoparticle surfaces with active emitters would provide a route towards controlling non-local interactions and would also provide a route to optically interrogate specific regions of the structure.

Another interesting variation is to prepare and stabilise the blend on a suitable substrate to enhance particular optical response. An example is a preparation on surfaces that locally enhance the surface plasmonic resonance or Raman scattering. The underlying substrate would then create hot spots, which would enhance the optical response of the particles in the hot spot regions detectably and by many orders of magnitude.

Other embodiments of the above ideas and concepts are:

- A metallic percolating film: By depositing a thin metallic film on a quartz substrate, and subsequently heating it to induce metallic reflow, a wide range of nanostructures can be realised, ranging from randomly oriented nanoparticle arrays as discussed above, to fully percolated fractal metallic films. These can serve as the unique and hard to reproduce system, and can be measured by the above techniques.

- Silver aggregates, on top of which metallic nanostructures are randomly distributed. The silver aggregates create local hot spots, which strongly enhance the optical response.

- Self assembled dielectric microresonators and fractal microcavity composites. The optical spectra of such systems can be extremely unique due to their extraordinary large number of sharp and distinguishable modes (see also [1], ch. Fractal Microcavity Composites: Giant Optical Responses, in particular pp. 157 or 161). These have the other advantage that their measurable optical properties are robust up to room temperature. detectable at room

- Nanocomposite materials such as random dielectric media are capable of exhibiting giant optical non-linearities due to local field enhancement effects. Phenomena such as second harmonic generation and other non-linear processes would be very suitable for our purposes.

- Surface Enhanced Raman Scattering (SERS): The Raman response of optically active and inactive molecules can be enhanced by up to 12 orders of magnitude by depositing them on randomly structured metallic surfaces. This principle can be adopted to create tokens with unique response in both the spatial, spectral and time domains.

Besides luminescence, the SERS is the only optical technique that shows sufficient enhancement in order to allow single molecules to be measured. This means that the faker would have to position and manipulate single molecules.

### 4.1.4 Read-Out Aspects

Depending on the requirements on the precision, sensitivity and resolution (spatial, temporal, spectral) various suitable read-out systems can be implemented.

- Scanning near-field optical microscope (high spatial resolution (up to 1 nm), low sensitivity, slow sequential read-out, high sensitivity to external conditions)
- Confocal scanning laser fluorescent microscopes (3-D profiling possible, high sensitivity, high intensity excitation, diffraction limited spatial resolution, limited excitation wavelengths)
- Conventional fluorescent microscopes (broadband excitation)
- Conventional optical microscopes
- Direct detection via CCD or CMOS camera (most inexpensive, least spatial resolution determined by the pixel size of the camera).

During the read-out process with the detection systems mentioned above, external fields and variations of other external parameters can be utilized in order to further influence the response of the object.

### 4.1.5 Security Aspects

Let us now argue in favor of the security of the suggested implementations of unique objects with respect to the following essential aspects.

1. Uniqueness in the production process: The nature of the manufacturing process guaranties that it is highly unlikely that two objects are produced that exhibit the same properties with respect to a given measurement protocol. The realization schemes described above rely on nondeterministic preparation methods such as mixing, coagulation, nucleation and growth, random scattering events of ions and particles, diffusion, formation of particle clusters, local crystallization or amorphization. Depending on the sensitivity of the envisaged detection system, the preparation conditions can be tailored in such a way that the probability of undistinguishable objects can be made very small.

2. Non-Copyability: It is hard for a counterfeiter to copy the unique object. The use of correlated particle systems, whose optical properties depend strongly on the relative distance and the spectral properties of correlated particles (e.g. the Förster Transfer, whose efficiency decreases as a high power of the spatial distance and only works for particles with almost identical transition energies). This provides sensitivity to distance variations on the Angstrom scale, even if the spatial resolution of the detection system (e.g. of a CCD-camera) is much lower (since distance and spatial correlation information is transformed into spectral information, temporal information or intensity information). Hence, in order to copy such a system, the faker would have to assemble a macroscopic system containing a large number of optically active particles with atomic precision. These difficulties persist even if only a few properties of the macroscopic system are measured. A further complication consists in the fact that external parameters might be used in the measurement process. Hence not only the spatial position but also other parameters such as orientation and further properties of the particles and the matrix have to be imitated by the fraudster.

3. Stability: Due to the use of a suitable and stable matrix, various levels of mechanical, chemical, thermal, optical, electrical and other forms of inertness can be achieved.

4. No Mimic or Imitation Systems: The proposed system relies solely on optical emission and/or transparency in a limited spectral range. It does not require an external power supply other than the purely optical excitation signal external and does not need the capability for electrical data processing or transfer. A mimic system would require a photonic synthesizer, which could generate deliberate photonic patterns in reaction to the possibly varying external excitation conditions. This obviously would require active optical elements (e.g. LED arrays), an internal power supply or an antenna, and electrical data processing capabilities (e.g. driver circuits). These components can be distinguished and detected from a purely optical system by conventional spectroscopic means, and in many cases will be distinguishable form the original structures through their slower response time.

These security aspects are further illustrated on the following example.

### 4.1.5.2 Energy Transfer Between Particles

One elegant solution to implement unique objects is to make use of the well-known phenomenon of Förster energy transfer between two nanoparticles [10]. The transferred energy thereby critically depends on the particle distance, with an observable structural sensitivity of 1 *nm* or even below. Furthermore, it can be measured relatively conveniently through recording the relative light intensities of the particles. Thus, Förster transfer allows us to indirectly observe spatial distances rather conveniently and at very high resolutions.

Again, however, some practical problems must be dealt with on implementing this idea. Energy transfer effects only occur when the spatial distance between the donor and the acceptor is small enough, typically on the order of a few nanometers. Thus, the chance that in a relatively sparsely concentrated particle distribution two particles come close enough is prohibitively low. On the other hand, rising the concentration too high makes it very difficult to observe single transfers between two particles. Therefore the particles need to be bond together chemically. One advantageous method consists of using DNA strands, since they allow relatively good, but not perfect control of the distances between the molecules. In a first attempt, one might thus proceed as follows in order to generate a unique object:

1. Bind quantum dots of two different sizes to a suitable number of DNA strands, in a distance that is close to the Förster radius $r_o$.

2. Distribute and subsequently passivate the strands randomly in a suitable polymer matrix. The expectation would be that this fixes the distance of each particle pair randomly and uniquely, with each distance varying around the Förster radius $r_0$. The concentration of the DNA complexes should be such that in each *unit cell*, that can later be resolved by the employed microscope, on average *one* complex is located.

The unique properties of this object, then, consist mainly of the unique sizes and frequencies of the dots and the unique distance between each quantum dot pair. Given the previous discussion, it seems suggestive to measure them as follows:

1. Illuminate the structure with a frequency $F_1$ that

excites only the acceptor of each quantum dot pair. 2. Measure the response of the structure in each unit cell, including the irradiated frequencies and light intensities. For each cell $i$, we expect to obtain one frequency $f_i^{Acc}$ with intensity $I_i^{Acc.NoTr}$ that results from the acceptor dot (please note that without loss of generality, we ignore those cells that contain no or more than one donor--acceptor pair in the sequel). Both $f_i^{Acc}$ and $I_i^{Acc.NoTr}$ depend on the size and geometry of the dot. At the same time, no response from the donor dot is expected. That is, the intensity of the donor frequency should be zero in each unit cell:

$$I_i^{Don.NoTr}=0.$$

3. Illuminate the structure with a frequency $F_2$ that excites the donor of each pair. This time, we expect that both the donor and the acceptor are excited due to an occuring energy transfer. Thus, in each unit cell $i$ we should observe signals at the two frequencies

$$f_i^{Don}, f_i^{Acc}, \quad .$$

$$I_i^{Don.Tr}, I_i^{Acc.Tr}>0.$$

The unique properties of the distribution, then, consist of all frequencies $f_i^{Acc}$ and $f_i^{Don}$, together with the intensities

$$I_i^{Don.NoTr}, I_i^{Acc.NoTr}, I_i^{Don.Tr}, I_i^{Acc.Tr}, \quad \text{for each cell } i.$$

The described measurement procedure should be executed on two basic occassions: First of all to determine the properties of the unique object in a first measurement at its original manufacturer, and also later whenever the structure needs to be tested for its unique properties (for example, when a banknote or an EC card are tested for their validity). Thereby it will probably make sense to only test the relative ratio between $I_i^{Don.Tr}$ and $I_i^{Acc.Tr}$, and the fact that $I_i^{Don.NoTr}=0$, since these figures are more environmentally stable.

Please note further that we assume that the resolution of the employed microscope is not too high, maybe on the order of 1 μm. The edge length of one *unit cell* should then be imagined to be on that order, too.

### 4.1.5.3 Security Problems

The above procedure provides a good starting point for further considerations, but cannot be called secure, since there are a number of possible aspects in which a fraudster can mount an attack. Let us discuss these security issues now.

### 4.1.5.3.1 Imitating Relative Intensities with Standard Dyes

One possible attack arises through the exploitation of the fact that any fluorescent dye has a different absorption and emission curve. This can make it possible to mix two dyes in such a manner that they imitate the reactive behaviour of the DNA-based nanocomplexes described in the previous section: At frequency $F_1$, dye 1 absorbs and emits, while dye 2 does not absorb and emit at all. At frequency $F_2$, both dyes emit and absorb. Mixing them in the right relative concentration will imitate the ratio between the intensities $I_i^{Don.Tr}$ and $I_i^{Acc.Tr}$.

### 4.1.5.3.2 mitating Particle Distance by Trial-and-Error

A further security concern arises through the fact that we can measure the relative intensities and thus the energy transfer rate only with limited accuracy. This implies that we can conclude about the distance between the acceptor and donor only with limited precision. In practice, we can effectively only distinguish between a finite number of different intervals of distance. Please note also that the transfer rate is always 1 for distances sufficiently smaller than $r_0$, and 0 for distances significantly larger than $r_0$. Thus, the energy transfer gives us no information about the distance of the particles in these regimes.

This fact poses problems on the security of the suggested approach. Let us assume for the sake of the argument that we can distinguish reliably between 20 different distance intervals or "bins". That means that whenever a fraudster repeats our manufacturing process and generates a DNA-strand with two attached quantum dots, whose distance varies around $r_0$, then he has a chance of 1/20 that he hits the same interval or bin as the original structure that he tries to fake. Hence, in order to reproduce a given donor--acceptor pair, a fraudster could simply generate a rather small number of DNA-complexes, passivate them, and subsequently select the one where the right distance ocured by chance.

Subsequently, the fraudster may repeat the process and produce a stock of pairs for each of the possible 20 distances. Given a certain unique object, he can then reproduce this object through use of his stock and suitable micropositioning techniques, which enable him to move the right complex into the right unit cell. Please note that these micropositioning techniques do not need to achieve higher resolutions than the length of one unit cell, which was assumed to be on the order of 1 $\mu m$ at the end of section 2.1. Micropositioning at these lengthscale appears to be feasible.

Also the different frequencies of the particles do not provide a sufficient guarantee against this attack. Since they can only be measured with limited accuracy, too, a fraudster can build a stock of particles sorted by their size or frequency, respectively. He can then choose the right particles from the stock or "library" to achieve his 1/20 chance that we described in the last paragraph. We call this sort of attack a "library attack".

To summarise, we need to require that the structural complexity of the nanocomplexes contained in each unit cell is so high that fabrication by trial-and-error can be ruled out. The upcoming sections will suggest several approaches to deal with this problem.

### 4.1.5.3.3 Two-Dimensionality

Another concern with the first implementation of section 4.1.5.2.1 is the fact that it only employs a two-dimensional structure. It is well known that nanopositioning works considerably better in two dimensions than in three. This is not to say that our approach, which would probably achieve a resolution between 0.1 and 1 *nm*, could be endangered by current mass-manufacturing nanopositioning methods; this is not the case. Still, its prospects in the *very* long term would be enhanced if we could enforce a fraudster to reproduce a structure with an accuracy in the single-digit nanometer range *in three dimensions.* This was useful, in particular, for applications like the labeling of banknotes, since they require security over very long timescales and in the face of long-term technological progress.

This brings us to some general issue which is important for our approach. When does a nanofabrication method pose a threat to our method? Only if it is capable to reproduce unique objects with the precision required to fool the employed measurement method, and, at the same time, operates at costs per object that are below the expected profits that result from faking. Thus, one needs to look for a mass-manufacturing method, not so much for very laborious sequential methods. As an example, take an AFM: It is conceivable that this technique can reproduce the distance between one donor--acceptor pair with the required precision. However, this method is simply to expensive, and there is also little trade off if one tries to reproduce the same structure more than once. Thus, current AFMs do not pose a great threat to our approach. Since future versions may do, however, the use of three dimensional structures seems to be necessary for ultra long-term security.

### 4.5.1.4 Countermeasures that Maintain Security

Having found that our first implementation attempt was insecure in a number of respects, we will now discuss some possible countermeasures. The structure of section 4 mirrors the structure of section 4.1.5.3, as each of its subsections fixes one of the security problem posed in the subsections 4.1.5.3.1 to 4.1.5.3.3, respectively.

### 4.5.1.4.1 Determining Cross Correlations

The energy transfer between two particles works according to the following scheme: If the donor is excited through capturing a photon, it may relax through either irradiating a photon itself, dissipating the energy through heat (not irradiating a photon at all), or passing on the energy to the acceptor. Thus, on the observation of an energy transfer between two particles, one will never detect two photons emitted by the two different particles *simultaneously.* This distinguishes am energy transferring structure from the faking structure of section 3.1, where the dyes will absorb and emit photons independently. This fact could be exploited to distinguish the original structure from a dye-based fake. To that aim, one measures the cross-correlation of the transfer between the different dots in the nanocomplex, thereby determining a strict sequential order on the dot illumination: Dot 1 always emits before dot 2 before dot 3 etc.

This provides an observer with a very strong indication that the two quantum dots are somehow coupled to each other, and that energy transfer occurs in the described circumstances. It should thus supplement our earlier measurement methods in order to maintain security.

### 4.5.1.4.2 Particle Sequences

As discussed at the end of section 4.1.5.3.2, it seems necessary to increase the intricacy of the nanocomplexes in order to prevent trial-and-error reproduction and subsequent micrositioning. To that aim, one may apply the following measure: Instead of using a structure of only one donor that transfers its energy to only one acceptor in each *unit cell*, one can set up a sequence of quantum dots, all consecutively linked to a DNA strand, in which dot 1 transfers to dot 2, dot 2 to dot 3, and so on. If our measurement accuracy allows us to distinguish between $m$ different distance values between neighbouring dots $i$ and $j$, and if there are $n$ dots attached in sequence, then there are $m^{n-1}$ distinguishable possibilities for the mutual distances of the particles in the whole nanocomplex (assuming that the distances are all independent). This means that the complexity increases exponentially with the number of quantum dots in the sequence.

Some further care must be taken when choosing the measurement methods to observe the structure, however. The suggestive procedure would be to excite the structure with the frequency of dot 1, observe the transfer to dot 2, then excite dot 2 and watch the transfer to dot 3, etc. This is faulty, since it does not guarantee that the dots really form a consecutive sequence. Some thought shows that this signal can be imitated by pairs of donors and acceptors, or, putting this differently, that this measurement strategy is unable to distinguish between a long, consecutive sequence and many single pairs of donors and acceptors. Some further thought will reveal that the picture changes when one observes the transfer from dot 1 to dot 2, but also from dot 1 to dot 3 via dot 2 in a first step, then from dot 2 to dot 3 and from dot 2 to dot 4 via dot 3 in a second step, and so on. Combining this with the observation of the anti-bunching effect should lead to a secure unique object.

### 4.5.1.4.3 Enforcing Three-Dimensionality

Let us take our approach yet another step further. As discussed in section 4.1.5.3.3, it was preferable if a fraudster could be forced to produce or reproduce, respectively, a three-dimensional structure in order to imitate the measurement signal of the original. However, for practicality reasons all that we wanted to observe were relative intensities. How can we enforce the fraudster to go three-dimensional under these restrictions? Let us illustrate the essence of the problem by an example: Suppose that you measured a structure with 3 quantum dots A, B and C, and that you obtained transfer intensities that allowed you to conclude that the mutual distances were $\overline{AB}$ = 5.1$nm$, $\overline{AC}$ = 4.9$nm$, $\overline{BC}$ = 5.2$nm$. In other words, A, B and C almost form an equilateral triangle. In that situation, the precise three-dimensional position of the triangle in the polymer matrix may be quite delicate and impossible to reproduce for the fraudster. Nevertheless, it is useless for our purpose, because it does not influence our measurement data, and thus cannot be inferred from it.

Hence, the fraudster does not need to care about the triangles's three dimensional position in the matrix. In order to imitate the desired signal, it suffices if he merely employs a two-dimensional manufacturing process, by which he can create a triangle with the given sidelengths in the plane. In principle, such a two-dimensional manufacturing technique exists already, namely an AFM (but it is prohibitively expensive to use in our context; see also the discussion at the end of section 4.1.5.3.3).

Now consider the following, altered situation: Suppose that you observed a structure with 4 quantum dots A, B, C, and D, and obtained the following mutual distances:

$\overline{AB}$ = 5.1$nm$, $\overline{AC}$ = 4.9$nm$, $\overline{AD}$ = 5.0$nm$, $\overline{BC}$ = 5.1$nm$, $\overline{BD}$ = 5.2$nm$, $\overline{CD}$ = 5.0$nm$. In other words: The dots form an almost equilateral pyramid! This structure cannot be imitated by arranging nanoparticles in two dimensions, because one can prove mathematically that it is impossible to arrange four particles with basically equal pairwise distances in the plane.

Thus, in order to imitate the measurement data, the fraudster is *enforced* to reproduce a structure in three dimensions, which is just what we desired. Other geometrical shapes than pyramids which enforce three dimensional positioning are also conceivable. In order to generate such arrangements of the quantum dots in practice, one might couple them to a pyramidally shaped chemical molecule. The bondings should have some, but not too much variation; may be some intermediate structure that induces the length variance on the right scales would be useful. The implementation details would be subject to further research, but the general idea overall seems very feasible.

### 4.1.5.5 Further Useful Measures

We will now sketch in all brevity a number of measures that might further enhance the security of our approach.

### 4.1.5.5.1 Exploiting the Particle Orientation

It is conceivable to use optically active particles which have non-symmetrical shape in our approach, and whose energy absorption of polarised light depends on the relation between the polarisation angle and the particle orientation. This effect could again be used to increase the intricacy of one nanocomplex that is contained in a unit cell in the sense of section 4.1.5.4.2 and the discussion at the end of section 4.1.5.3.3.

### Exploiting the Effects of the Polymer Matrix

Also the matrix in which the quantum dots or other nanoparticles are embedded has some effect on their properties. These stem from the precise molecular configuration of the direct matrix environment of each particle. The quantitative scale of these effects forms randomly in the manufacturing process, and cannot be predetermined. Possible qualitative effects include a shift of the frequency that is irradiated by the dot, or plasmon resonance if suited nanoparticles are used, for example silver nanoparticles. This makes the *"library attack"* of section 4.1.5.3.2 yet more difficult, and is again suited to enhance the intricacy of the whole structure.

### 4.1.5.6 Summary

We have discussed one advantageous practical implementation of unique objects. The basic idea was to beat the diffraction limit by observing the energy transfer between particles, which allows a structural resolution on the order of nanometers. Our further analysis revealed, however, that in order to realise this idea securely in practice, additional concepts are required. The concepts that we suggested included using particle sequences and measuring anti-bunching effects or cross-correlations, respectively. These measures, as well as the other measures of section 4.1.5.5, are mainly directed towards two goals: Increasing the intricacy of the observed nanocomplexes on the one hand, and ensuring that the observed relative intensities really stem from an energy transfer (and not from other effects) on the other hand.

A very useful further concept, which can enhance security against technological progress in the very long term, was to use three-dimensional geometrical structures which cannot be realised in the plane. This enforces a fraudster to execute nanoscale fabrication in three dimensions, which is considerably more difficult. By the concepts we described in section 4.1.5.4.3, we may conclude about the three-dimensionality of the observed structure even if we observe only relative intensities. In comparison with other optical approaches that implement unique objects [5], our concepts have the following advantages: Firstly, they achieve a spatial resolution that is higher by three or four orders of magnitude. Secondly, they do not require that a laser beam or another exciting signal is moved across the structure with very high precision, which is difficult to implement error-free in practice.

Altogether, it seems that the proposed approach provides one favorable solution for the implementation problem of unique objects. It is both practical, relatively cheap and highly secure. Its optical nature enables measurement without physical contact and high stability of the measured probes over long periods.

## 4.2 Optical Microcavities or Optical Resonators

A photonic crystal is a periodic arrangement of materials with different refractive indexes. Similar to semiconductor physics where the periodic electronic potential of the atoms lead to an electronic band structure for the electrons with bands and thus allowed and forbidden energy ranges for electrons, the periodic varying refractive index leads to a band structure for photons, where in certain geometries photonic band gaps arise. This means that a photonic crystal can be build in such a way that photons of a certain wavelength are not able to propagate within the photonic crystal.

Optical resonators formed by introducing defects into two-dimensional photonic crystal slabs are capable of localizing light and can exhibit ultra high finesse optical modes. Due to the unavoidable disorder that arises during the fabrication of 2D photonic crystal membranes (electron beam lithography, reactive ion etching, HF etching), many features of the optical mode spectrum vary inevitably between any two, nominally identical, objects. These fluctuations can provide a unique and difficult-to-reproduce fingerprint.

The nanoscale size of the object prevents the fluctuations to be read out exactly, even by state of the art imaging techniques.

In detail the unique properties are:

- Mode wavelength: The wavelength of the emitted light varies.
- Mode quality factor Q:
  The quality factor Q of a cavity mode characterizes the optical quality of the cavity. A high Q factor corresponds to a very sharp cavity mode and thus to a long localization time of the light in the cavity.
- Polarization
  The polarization of the emitted light varies.
- Dependence on excitation power
  Especially in the structures with quantum dots the dependence of the intensity of the emitted light from the cavity is depending in a non-linear way on the excitation power.
- Far field pattern With the varying photonic crystal holes, the cavity mode pattern itself varies. This complex value determines the mode pattern in the far field, which means the image that arises when one measures the signal from the cavity spatially dependant.
- Angular distribution of emitted light
  The cavity emits light in the 3D space. Thus the angular distribution of the emission varies with the fluctuations.
- Time resolved response of the object to an excitation pulse
  Due to the localization of the light in the cavity a time dependant measurement of the cavity modes results in a specific time response.

To enhance the complexity, one could not use only one cavity but an array of cavities. If the distance between the cavities is large they do not couple and the complexity of the object is only linearly increased. If the distance of the cavities is however small enough coupling between the cavities occur, which means that the properties of one cavity influences the properties of the surrounding cavities. This is particularly useful for our purpose, since it means that many -- or ideally all microcavities -- interact in the generation of the spectrum and the optical modes and/or resonant optical modes. This can be further fostered by special geometries for the interconnection of the coupled cavities. For example, the cavities can be placed along a waveguide structure, or connected via a waveguide- like structure; such types of structures are depicted, for example, in [98], Figure 1(a), 1(b), 1(c). As shown in [98], such structures can exhibit a very high amount of sharp and clearly distinguishable modes, which makes them especially suitable for our purpose. See also [98] as a general reference for coupling or microcavities, and the references given therein.

One potentially advantageous implementation of unique objects are optical resonators or, more specifically, optical microcavities. These are optical objects which can confine lightwaves for comparably long timescales. During confinement, the lightwaves interact very strongly with the cavity surroundings, and the cavity finestructure imprints itself into the characteristics of the lightwaves. When the lightwaves later leave the cavity, their characteristics can act as a unique fingerprint of the unique finestructure of the cavity. This optical fingerprint can be measured more conveniently than the material finestructure of the cavity itself. Please note in this context that due to the microscale size of the microcavity, it is impossible to control the disorder during fabrication, whence no two microcavities have or can be produced to have the same finestructure.

One particularly promising candidate for our purposes are photonic crystal microcavities with quantum dot emitters. Using quantum dots as emitters have the additional advantage that they make it easier to excite the cavity, and that they introduce further unique characteristics to the overall object through their unique emissive behavior.

We will lead the subsequent discussion for photonic crystal microcavities, but would like to stress that similar considerations apply to all types of microcavities or optical resonators. For example, optical monolithic microresonators can be used to generate frequency combs, as has been shown in [23]; see also the references quoted therein. The large number of distinctive modes, whose precise frequencies inherently depend on the finestructure of the microresonator, makes these structures and their mode spectrum very well suited for our purposes, too. Just as with photonic crystals, it is conceivable not only to use the mode frequencies, but also time dependent characteristics, Q-factors or mode width, respectively, or the dependency of these values on the excitation signal or other features of the whole spectrum. Other types of microresonators that could be useful for our purpose, too, include microtoroids, microdisks or microspheres.

### 4.2.1 Unique Optical Characteristics of the Microcavities

The characteristics of photonic crystal microcavities that depend on production irregularities and are suggestive as unique properties or "unique fingerprint" of each cavity include the following:

1. The frequencies, intensities and polarizations of the cavity modes, as well as their time-varying behavior and their (non-linear) dependency on the intensity of the laser stimulating the quantum dots.

2. The varying spatial distribution of the intensity of each cavity mode in the vicinity of the microcavity (see Figure 8).

3. The linewidth of the Lorentzian peaks (i.e. the "broadness" of the peaks occurring around the mode frequencies in the cavity mode spectrum), which is known as the Q-Factor of the respective mode.

4. The dependency of the values listed in items 1. to 3. on the excitation signal, that is, on the continuous wave or laser pulses used for that purposes. Among others, the optical response of the microcavity can depend on the different frequencies, intensities, polarizations, durations, coordinates of incidence, laser spot diameter and shape, and direction, of these continuous wave or laser beam signals.

5. The time dependent behavior of the features listed in items 1. to 3., possibly in combination with varying excitation signals listed in item 4.

The listed unique features can be measured by relatively inexpensive optical techniques, which make photonic crystal microcavities with quantum dot emitters good candidates for the practical realization of unique objects.

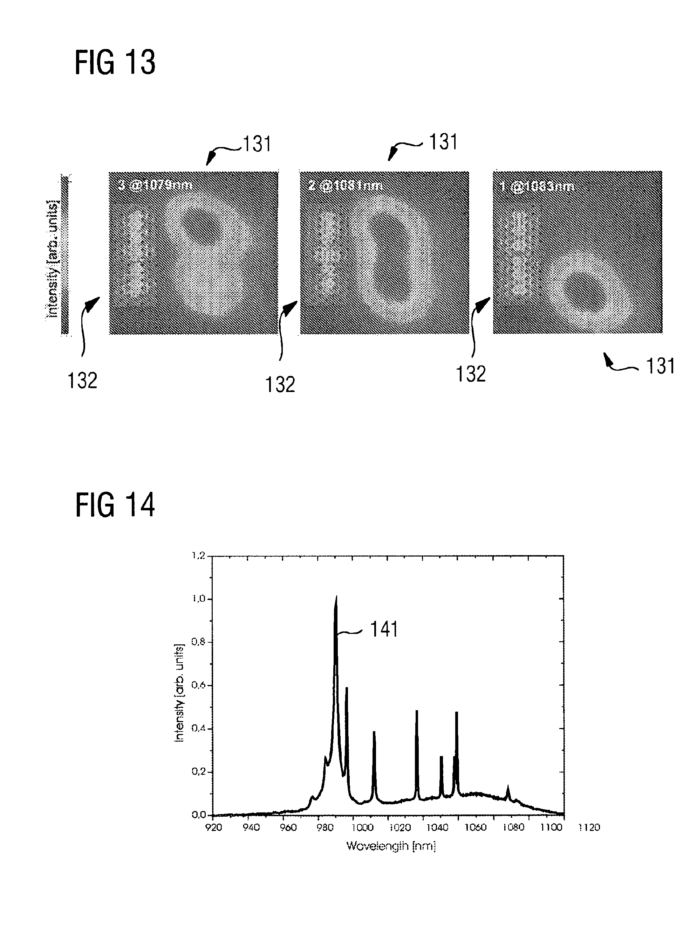

Figure 13 shows three different spatial intensity distributions of three cavity modes of in a photonic crystal microcavity. A large scale spatial intensity distribution 131 represent the measured spatial intensity distribution whereas spatial intensity distributions 132 depicted in insets represent simulated spatial intensity distributions.

The spatial distribution of intensity of each cavity mode can relatively easily be determined by an imaging detector.

Figure 14 shows a typical cavity mode spectrum 141 whose line width can be easily determined for characterizing the cavity mode spectrum.

### 4.2.2 Long-Term Security Measures

What would happen if technological breakthroughs at some point could help to significantly reduce or even to control the disorder in the production of photonic crystal microcavities? There are two readily available and easily implementable countermeasures to resolve the situation.

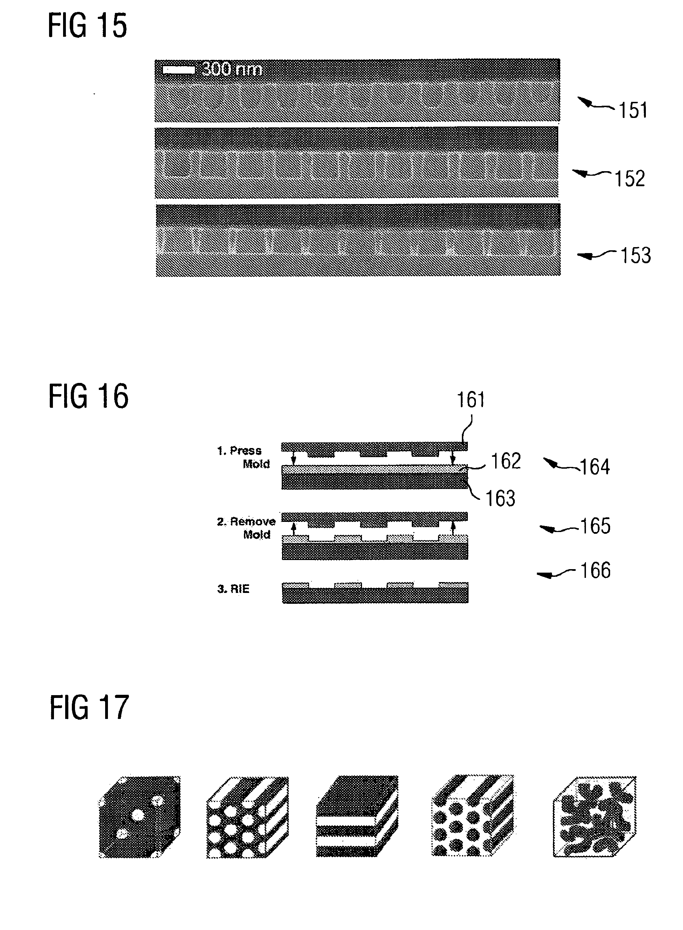

1. First of all, we do not need to use the hypothetical new technology for photonic crystal production, but may employ techniques specifically designed to induce particularly strong and irregular types of disorder. This strategy is illustrated by Figure 15, which opposes the disorder resulting from optimized and non-optimized production processes. The imperfections arising from non-optimized processes are apparently more discriminative and will be significantly harder to rebuild. Figure 15 shows side views on photonic crystal structures 151 to 153. The phototonic crystal structures 151 and 153 are fabricated by non-optimized production processes whereas the photonic crystal structure 152 is processed by an optimized production process. Disorder occurs in all three photonic crystal structures 151 to 153 but the imperfections in the photonic crystal structures 151 and 153 will be harder to rebuild.

In fact, intentionally bad production techniques could already today be used advantageously to render refabrication more difficult.

2. The used microcavities can also be made smaller. One interesting property is that their general features scale very well with their size. Phenomena like their reflective properties and the occurrence of cavity modes are preserved if the whole structure is shrinked within reasonable limits by a constant factor. All that changes is the lightwave regime in which these phenomena occur. The upside of this approach is that smaller structures are more sensitive to finer types of disorder. This enables us to adjust the structural size of the crystals in order to live right on the edge of current nanofabrication methods, and to thereby maintain their suitability as unique objects over long time periods. This technique can in principle be applied until the gap between pick-and-place and coarser techniques fully closes, which seems a very long way ahead.

### 4.2.3 Practical Issues

We will now consider practical aspects regarding photonic crystals. In particular, we are going to discuss their fabrication, stabilization and measurement.

### Inexpensive Mass Fabrication

Photonic crystals can readily be mass fabricated using novel nano-structuring processes such as nanoimprint lithography, which is schematically illustrated in Figure 16.

The technique illustrated in Figure 16 uses a prefabricated stamp 161 to define structures in a thermosensitive polymer 162 deposited on a substrate 163. A first process step 164 involves direct stamping of the stamp 161 into the thermosensitve polymer and subsequent cooling of the polymer 162. In a second process step 165, the stamp 161 is removed, revealing a copy of the stamp 161 in the polymer material 162. In a third method step 166, subsequent processing steps, for instance reactive ion beam etching (= RIE) and pattern transfer, can be used to copy this pattern into the underlying semiconductor material.

At first sight it might seem that such parallel nanostructuring approaches would provide the faker an ideal tool to mass produce identical photonic structures. However, already during the stamping process inevitable irregularities occur. Furthermore, all subsequent nanofabrication steps, such as the aforementioned RIE, will unavoidably introduce additional disorder, which yields unique structures. Due to these properties nanoimprint lithography provides an ideal method to mass produce nanoscale unique photonic materials cost and time effectively.

Another way to use the nanoimprint technology is to directly imprint a photonic crystal microcavity in a mold made of organic or inorganic nanoparticles. During the printing process the nanoparticles arrange in a unique way, which can result in unique optical properties of the crystal. For instance, nanoimprinted Silicon nanocrystals with a line spacing of about 200 nm may result in an unique structure. With an appropriate stamp advanced structures of e.g. nanoimprinted Silicon nanocrystals for photonic crystals or photonic crystal microcavities can be fabricated.

To further enhance the non-reproducible irregularities, different nanoparticles can be used for one photonic crystal. And to alter the optical properties fluorescent nanocrystals could be built in such nanoimprinted or nanoembossed structures. Even a polymer, which acts as a host matrix for fluorescent or non-fluorescent nanoparticles, can be imprinted and used as a photonic crystal.

Another approach to fabricate 3-dimensional photonic crystals or 3D photonic crystal cavities on large scales and cost efficiently could consist of using self-assembled structures made of block copolymers. Figure 17 shows different periodic structures made of block copolymers by varying the ratio of the molecules (taken from [32]). These structures can be used as photonic crystals if suitable polymers in the right ratio are used. By attaching nanoparticles on block copolymers, one can build up hybrid polymer-nanoparticle networks. After an annealing step the polymer can be removed from the structures and a stable network made of nanoparticles remains, which could be used as a photonic crystal. During the self-assembly process defects will arise, depending on the impurities and the process parameters, which are useful for the uniqueness of the photonic crystals.

### Stabilization of the Photonic Crystal Microcavities

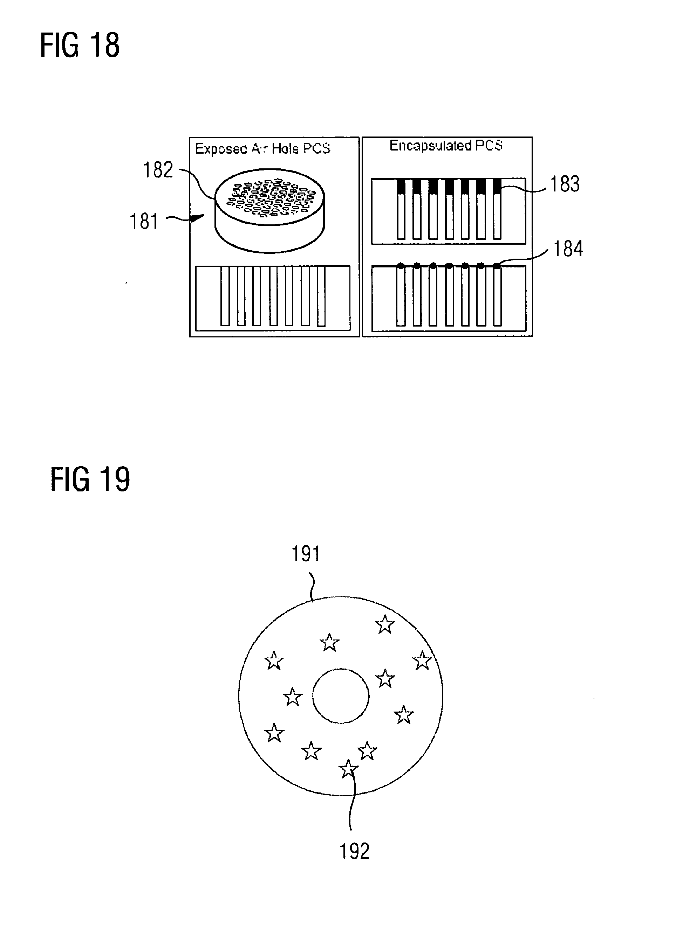

In order to stabilize the optical properties of the photonic crystals they have to be passivated to prevent oxidation, infiltration with airbourne pollutants and damage to their structural integrity. These problems can be circumvented by encapsulating the photonic nanostructure using optically inert polymer or plastics. Such techniques are commonly used for a wide range of optoelectronic devices and have, already over a decade ago, been applied to photonic crystal semiconductor lasers. An example of such passivation approaches is presented in Figure 18 that shows a schematic image of a photonic crystal nano laser 181, in which the air holes have been plugged with an optically inert polymer 182 to successfully prevent degredation. Unique photonic structures can be readily passivated using similar techniques. Their optical functionality and unique properties will then remain stable in environmental conditions, a key fact for successful practical applicability. The photonic crystal structure can be encapsulated by encapsulation caps 183 or by using nano-particles 184 that cover the holes 185.

**Inexpensive and Quick Measurement**

In order to readily probe the optical information from the photonic crystal, a measurement technique that combines high spatial and spectral resolution is required. Whilst high spectral resolution can be easily attained using an inexpensive prism monochromator coupled to a multichannel CCD detector, high spatial resolution will be achieved using a metal shadow mask on the sample surface. Such techniques are commonly applied in systems where optical measurements are performed in transmission geometry. They consist of depositing a opaque metal mask on the photonic crystal surface with an aperture in the vicinity of the photonic crystal nanocavity. Light incident from the upper side of the system is transmitted only through the optically relevant region of the object and the spectral properties can, therefore, be easily recovered.

Such a measurement apparatus can be constructed routinely, using a small number of off the shelf optical components. The cost would be expected to be around a few hundred dollars only, which could still reduced significantly by the mass production of dedicated measurement apparatus.

**4.3 Random Lasing**

**4.3.1 Introduction and Overview**

A further possible embodiment of unique objects consists in lasing action in a disordered medium with optical gain (powders forming disordered clusters of nanocrystals, colloidal suspensions, thin polymer films, etc.), commonly referred to as random lasing. For strong scattering, the light may backscatter to its original position, providing coherent feedback which serves as a local laser resonator in the disordered media. Such a object contains information in the form of the properties of the scatterers and thus the associated local random lasing paths, involving position, spectral and directional properties, time dependent optical behavior (e.g. decay times). In addition all of the above properties of a given local lasing path can be influenced by interaction with one or more of the other lasing paths in the object. Furthermore, the optical properties of the object can be influenced reversibly or irreversibly by external parameters such as temperature or pumping light intensity.

For the present application it is of particular importance that the location, correlation and physical properties of the scatterers can be prepared in a sufficiently random fashion, so that the object will be difficult to clone or reproduce. Furthermore, the unique properties of the object can be read out in a rather simple, reliable, inexpensive and time efficient manner.

**4.3.2 Physical Principles**

The physical principle of random lasers lies in the combination of optical gain and random scattering in the disordered material, giving rise to the formation of local looped random lasing paths. For weak scattering, the optical propagation corresponds to a normal diffusion, leading to nonresonant feedback. For strong scattering, the light waves are trapped by multiple light scattering processes, leading to Anderson localization of light and coherent or resonant feedback in the laser medium [24]. The basic physical quantity to be detected is the spatially resolved (point of origin on the surface and spatial angles of the response) optical response to a continuous wave optical excitation or short laser pulses with different frequencies, intensities, duration, coordinates of incidence, laser spot diameter and shape, and direction of the laser beam. This optical response contains the individual spectral characteristics of each local lasing path, directional properties, the intensity or quantum efficiency, saturation effects, decay times, polarization, and temperature. All of these properties in principle will be influenced by spatial correlations between different lasing paths which depend strongly on the spatial overlap of those as well as on their individual optical properties, their position and orientation and the properties of the medium.

All of the above properties can be detected with standard optical spectroscopy methods, if needed with high spatial, spectral and temporal resolution as defined by the present state of the art in optical spectroscopy.

**4.3.3 Embodiments**

**Embodiment 1:**

One example of very compact random lasers (diameter about 1.7 $\mu$m) are disordered grains of zinc oxide, acting as gain medium and scatterers at the same time and operating around 380 nm at room temperature [25]. Here, ZnO powder is used as the starting material, and the nanoparticles are synthesized with a so-called precipitation reaction to form a cluster consisting of about 20000 ZnO nanocrystallites. With fabrication costs of much less than one cent [26], these devices are very suitable for mass production. The specific emission frequency, which depends on size and shape, makes the device suitable for encoded marking of materials and documents [26]. Random lasing in these clusters is assumed to be based on additional feedback from the grain surfaces rather than Anderson localization [26]. Physical variables are the size and shape of the cluster as well as the size, shape, position and orientation of the individual crystallites.

**Embodiment 2:**

A second embodiment are random lasers based on a blend of scattering elements and a separate material as gain medium, allowing to vary the amount of scattering. One embodiment experimentally demonstrated is a suspension of rhodamine 640 perchlorate dye and ZnO particles in methanole [27, 28]. However, unique objects call for a solid matrix rather than a suspension to fix the relative spatial positions and orientations of the crystallites, as was experimentally realized with blends of scatterers and lasing dyes in polymer film [29, 30].

**Embodiment 3:**

A third embodiment are random lasers based on polymeric neat films without intentionally introduced scattering centers. Here, scattering is introduced by disuniformity in the film morphology, like small holes [31].

### 4.3.4 Pumping and Read-Out Aspects

The pumping of the random laser can be done by focusing the pump beam of a cw or pulsed (Q-switched, mode-locked, etc.) laser with different pulse durations and/or center frequencies in various chosen angles onto different selected areas of the sample. Depending on the requirements on the precision, sensitivity and resolution (spatial, temporal, spectral), various suitable read-out systems can be implemented.

- Collection of the sample emission by an optical fiber attached to a goniometer for angle resolved measurements

- Imaging of the sample emission with a microscope onto a charge-coupled device (CCD) camera (bandpass filter in front of the microscope objective blocks the pump light)

- Measurement of the far field speckle pattern with a two-dimensional CCD camera (attached to the exit of a spectrometer for spectrally resolved speckle technique)

- Spectrally resolved measurements by an optical multichannel analyzer

- Measurement of temporal characteristics by focusing sample emission onto a monochromator and using a fast photodiode and oscilloscope combination

### 4.3.5 Security Aspects

Let us now argue in favor of the security of the suggested implementations of unique objects with respect to the following essential aspects.

1. Uniqueness in the production process: The nature of the manufacturing process guarantees that it is highly unlikely that two objects are produced that exhibit the same properties with respect to a given measurement protocol. The realization schemes described above rely on nondeterministic preparation methods such as mixing, coagulation, formation of particle clusters, random disuniformities in the material. Depending on the sensitivity of the envisaged detection system, the preparation conditions can be tailored in such a way that the probability of undistinguishable objects can be made very small. In this context, we note that random lasers with resonant feedback provide more distinct spectral features in the lasing spectrum, and thus have more unique spectral characteristics than those with nonresonant feedback.

2. Non-Copyability: It is hard for a counterfeiter to copy the unique object. Random lasers are systems with intentionally introduced scattering centers or natural disuniformities like defects, whose optical properties depend strongly on the relative distance, orientation and shape of the scatterers. Especially in random lasers with resonant feedback, this provides sensitivity to distance variations on the Angstrom scale, even if the spatial resolution of the detection system (e.g. of a CCD-camera) is much lower (since distance and spatial correlation information is transformed into spectral information and furthermore angular, temporal or intensity information). Hence, in order to copy such a object, the faker would have to assemble a macroscopic system containing a large number of optically active particles with atomic precision. These difficulties persist even if only a few properties of the macroscopic system are measured. A further complication consists in the fact that external parameters might be used in the measurement process. Hence not only the spatial position but also other parameters such as orientation and further properties of the scattering centers have to be imitated by the fraudster.

3. Stability: Due to the use of a suitable and stable random lasing medium, various levels of mechanical, chemical, thermal, optical, electrical and other forms of inertness can be achieved.

4. No Mimic or Imitation Systems: The proposed object relies solely on optical emission in a limited spectral range. It does not require an external power supply other than the purely optical excitation signal external and does not need the capability for electrical data processing or transfer. A mimic system would require a photonic synthesizer, which could generate deliberate photonic patterns in reaction to the possibly varying external excitation conditions. This obviously would require active optical elements (e.g. LED arrays), an internal power supply or an antenna, and electrical data processing capabilities (e.g. driver circuits). These components can be distinguished and detected from a purely optical system by conventional spectroscopic means, and in many cases will be distinguishable from the original structures through their slower response time.

## 4.4 Unique Optical Storage Media

Optical storage media like CDs or DVDs can be combined very well with the approaches that we have described so far. In principle, most of the discussed unique structures can be distributed randomly over a CD or DVD during the production process, which introduces unique characteristics to the storage medium. Since the read out process of these optical storage media works by laser beam and detection of the scattered or reflected signal anyway, the design of a CD or DVD player is in principle well suited to read out the analog unique effects that, for example, randomly distributed nanoparticles on the CD or DVD surface would cause.

Please note that any other of the effects that we have described so far, including energy transfer phenomena, or dependency on polarization or excitation energy, could in principle be exploited in the described fashion. It is also conceivable to exploit random lasing effects or optical cavities.

Figure 19 shows a data carriers, for instance, a CD or DVD, that stores some digital content together with a numerical description of its unique characteristic. The data carrier 191 is further provided with nano-particles 192, which randomly distributed over a data carrier 191 and wich have random unique features such as size, shape, color, orientation position, etc.. Such a data carrier 191 is well suited as an optical storage medium for copy protected content (see section 3.2).

## 4.5 Electrical Unique Objects

### 4.5.1 Introduction

One possible embodiment of electrical unique objects consists of a random distribution of electrically active junctions in form of a thin film integrated electronic device. Such a system would contain information in the form of individual current-voltage characteristics of a large number of interacting electronic junctions. A preferred property of such junctions is a strongly non-linear current-voltage behavior such as for a p-n-diode or a Schottky diode. In addition all of the above properties of a given junction can be influenced significantly by external illumination, external magnetic or electrical fields and/or temperature. A further preferred property of the junctions consists in the fact that their behavior is mutually dependent on the behavior of one or more other junctions.

For the present application it is of particular importance that the electrical properties of a given junction can be prepared in a sufficiently random fashion, so that a sufficiently large array of junctions will be difficult to clone or reproduce. On the other hand, the unique properties of the object can be read out electrically in a rather simple, reliable, inexpensive and time efficient manner.

### 4.5.2 Physical Principles

The physical principle behind the object as described above lies in the strong dependence of miniaturized electric semiconductor heterojunctions on physical parameters such as doping, temperature, area, defects, interface states and the applied bias. The basic physical quantity to be detected is the current across a given junction for a particular set of bias voltages applied to that junction or to other junctions interacting with that given junction. Contrary to the usual aim of integrated circuit design to produce reproducible devices which exhibit minimized manufacturing fluctuations in their electronic behavior, the present system of junctions can be produced in such a way as to purposely increase the device to device fluctuations to a level that makes the inter device difference conveniently measurable.

All of the above properties can be detected with standard electrical conductivity measurements, which are easily achieved with high accuracy and high speed by conventional current voltage profilers.

### 4.5.3 Embodiments

**Embodiment 1:**

One embodiment which can be realized with inexpensive starting material and which would hence be suitable for mass production consists of a matrix of silicon-based p-n- or Schottky-diodes produced on a glass substrate by laterally inhomogeneous deposition techniques. This inhomogeneity is important to guarantee the desired significant junction to junction variations. Such a suitable deposition technique is the laser induced, thermal or metal catalyzed crystallization of thin amorphous or nanocrystalline precursor films of silicon, silicon-germanium, etc. Here the statistical nature of nucleation and growth of individual crystallites is of primary importance for the complexity and/or the unique properties of the object. With the help of suitable metal electrode arrays of desired area and pitch electrical contact can be made to individual or multiple crystallites in the form of a sandwich geometry. The electrical contact can either be Ohmic or of Schottky type, depending on the electrode metals and/or the doping properties of the thin semiconductor film. Moreover, in general non-linear interactions between neighboring junctions can be realized.

A suitable read-out mechanism consists of the following protocol:

- Choosing at least two (preferentially as many as possible) contact pairs, where a contact pair means two metal contacts allowing the addressing of a particular junction.
- Application of a given voltage or multiple voltages to the input lines of one or more contact pairs, and determination of the corresponding currents in the output lines.

- Variation of the voltage(s) in order to utilize non-linear crosstalk between interacting contact pairs and/or the non-linear current-voltage-characteristics of a given contact pair.
- Further, external parameters such as temperature, illumination, time-varying vs. continuous voltages etc. can be introduced to further increase the accessible parameter space and the complexity of the measurement. A particular advantage of this electrical realization of unique objects consists of the ease of the read-out mechanism with simple analog-digital converters (no optical elements) and the clock rate by which the unique object can be probed. A particular advantage is the ease of complete protection against external access and external emulation by enclosing the unique object and the measurement device into a Faraday cage.

**Embodiment 2: Ultrafast Unique Objects with Electrical Read-Out**

Electrical systems have particular attractiveness, since they can be read-out conveniently by use of well established and cheap technology; also shielding them against external influences and achieving read-out stability would work most easily.

However, the fact that design methods in the field of microelectronics are so advanced poses a great challenge to the design of electrical unique objects. With state-of-the art digital and mixed-signal circuit design technology, it is possible to design a circuit that can synthesize basically any analog / digital waveform as a response to a given excitation. In fact, there are even well-established, systematic techniques for this task. A faker can always use these methods to build a circuit that is indistinguishable (by electrical measurements) from the original electrical unique object, simply because it reproduces the output signal of the original object.

To make a unique object with electrical read-out truly unforgeable, it must hence show (at least) some extreme performance attributes that prevent the described faking approach. Possibilities include:

- The circuit is extremely low power / power efficient
- The signal / spectrum of the signal is extremely rich
- The circuit is generating very little noise
- The circuit is extremely fast.

In many cases the listed unique properties can be measured with the necessary precision only under laboratory conditions. Inexpensive electrical interfaces will always introduce noise, parasitic resistances and unwanted capacitances. Varying ambient conditions and the need to use low-cost read-out apparatus will further limit the accuracy, frequency or repeatability of the measurements. If the faker can have control over some environmental variables (e.g. temperature), or uses high power to increase speed or reduce noise or simply applies a more expensive circuit technology, then the security of the electrical unique object can be breached.

We propose diode-based passive, nonlinear circuits for electrical unique objects, which are very simple in their construction but has a response time (speed), which is extremely difficult to reach by a more complicated faking circuitry.

**An electrical-optical unique object based on ultrafast photodiodes**

We propose an electro-optical unique object, which unifies the benefits of electrical and optical systems. It operates at the speed limits of current technology, but can nevertheless be read out with inexpensive machinery. In order to achieve these features, the object is excited by multiple, ultrafast laser pulses, but read-out electrically. The ultrafast excitation plus the unique circuit characteristics determine the circuit response, but this response can be read-out slowly and without the need for high accuracy; the response could even be read out as a single bit value. It is determined by the complex, ultra-fast internal dynamics of the (passive) circuit elements.

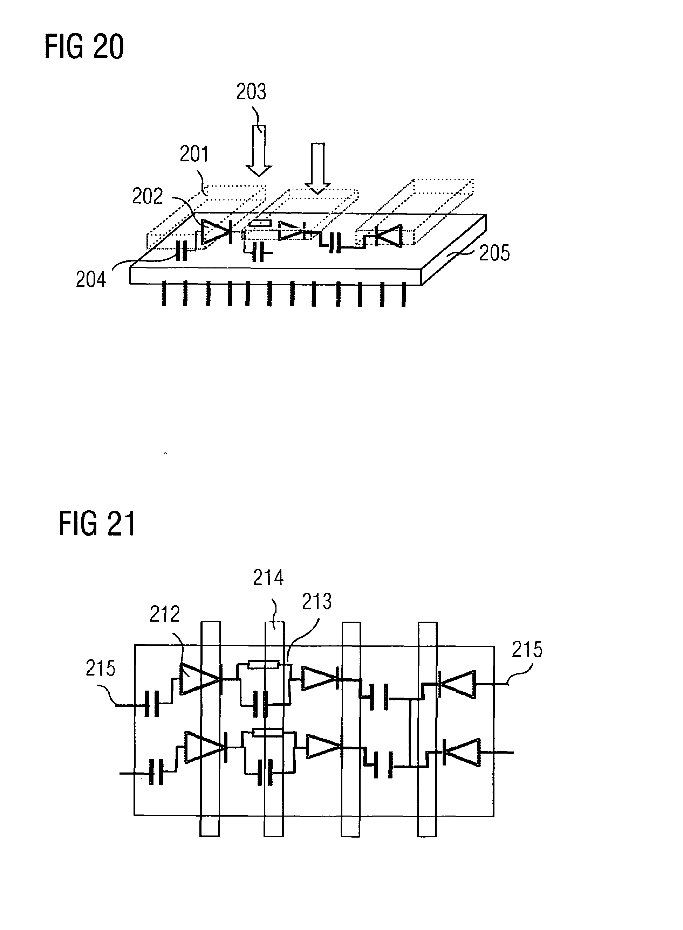

Figure 20 shows the electro-optical unique object 1 that comprises a number of windows 201. Through the windows 201 a number of photodiodes 202 can be irradiated by laser pulses 203 in the nanosecond range. The photodiodes 202 are connected to capacitances 204 that can be read out by charge measurement circuit 205. The charge measurement circuit may be constructed similar to circuits used for reading out DRAMs. The charge measurement circuit 205 may finally be read out by contacts 206 which can also be used for applying a bias voltage to the photodiodes 202.

The circuit is to be operated the following way:

- The circuit state is reset (all internal capacitors are discharged) and (optionally) the circuit is biased by DC voltages (V).
- A sequence of laser pulses is generated and applied to the circuit. The durations ($\tau$) and relative timings ($\delta$) of the signals should be in the picoseconds range.
- As a result of the photo-induced carriers, the capacitances of the circuit become charged. The charges on some of those capacitors are subsequently measured, and using and amplifier and / or A/D converters, they are given as outputs. The time scale of the read-out is T, and can be in the comfortably achievable microsecond range.

The circuit is characterized by the function that maps the challenge $C(\tau,\delta,V)$ to the response Q, i.e. the set of output charges. The function should be non-invertible in the sense that it is not a one-to-one (a.k.a. injective) function. The response Q, obviously, cannot be a simple integral of the photon flux, but must be sensitive to the relative timings of the input photon beams. With GaAs photodetectors, time resolution in the picosecond range is achievable [99].

In order to imitate the circuit behavior, the faker would need:

- To reproduce the diode characteristics, photodiode characteristics capacitances, resistances, on the same size scale as the original circuit. This is practically impossible if the circuit is made by state of the art microelectronic technology.
- Build faster photodetectors and active signal generation circuitry to reproduce the signal. The speed of a photodetector is determined by physical limits (carrier mobility, etc), which makes this task very difficult for fundamental, not just practical reasons. Also, a compact passive circuitry will be always faster than an active circuitry that needs to gather the data and generate the signal.
- Build a circuit with similar structure, which is effectively used as a sensor to resolve the incoming optical signal, and subsequently transform the measured charge values Q' to the Q response of the faked circuit by some active, intelligent circuitry. This is made impossible, however, by our requirement that the $C(\tau,\delta,V) \rightarrow Q$ operation is non-invertible (not injective).

The security of the system rests on the fact that any intelligent circuitry set up by a faker would work slower than the original system, and could not resolve the applied sequence of ultra-fast laser pulses. For this reason, it cannot distinguish between different sequences of pulses that are used as input signals to the system, and hence cannot return the correct outputs, even if it had a look-up table with all correct output values. On the other hand, if the faker uses the same type of diode network in an imitation system, he could not exactly reproduce the original network. The inevitable manufacturing variations would leave him with another system that has different input-output characteristics.

**Non-linear diode network, operating at high frequencies**

A lower-security unique circuit, operating purely in the electrical regime, can be built from a small network of diodes. Figure 21 shows a purely electrical unique object 1 that comprises a passive network 211. The network 211 comprises nonlinear elements, in particular diodes 212 and a resistive, inductive and / or capacitive wiring 213 and some longer metal wires 214, which also serve as antennas to couple high-frequency signals in and out of the network 211. The network 211 is further provided with biasing wires 215.

The circuit is operated in the following way:

- Using the biasing wires 215, the network 211 is biased in a certain operating point.
- A high-frequency excitation (10 - 100 GHz) is applied to the antenna segments 214 (at some frequencies) and the intensity of the back-radiated signals is measured. Due to the nonlinearity of the diodes 212, higher harmonics are going to be generated.
- The back-radiated high-frequency signal is measured in some bands and compared to the (given) characteristics of the unique object 1. If the agreement is reasonably high, the unique object 1 is accepted as genuine.

The faking of this unique object is not impossible technologically, but could be difficult, because:

Synthesizing the signals requires a larger-size circuit, which has to be fabricated or at least programmed for each particular unique object 1. It probably requires external power supply, dissipates high power, and could be bulky. These facts make its detection possible.

Alternatively the faker may be able to assemble a unique object from diodes and other compounds that is indistinguishable from the original (as far as the input-output relation is concerned), but it requires considerable effort and should be re-done for each particular object. This effort does not pay off for the faker, if the unique object is used in a low-cost, low-security environment (such as band protection in retail stores, etc).

**High-frequency voltage patterns of active or passive circuits,**

Voltage patterns forming in high-frequency circuits can carry a unique fingerprint in their spectrum or voltage distribution. We propose two forms of such circuits:

1. Passive circuits, where interactions / reflections forming in a microwave network form a complex spectra and this network contains nonlinear elements and it can be operated in various operating points,
2. Active circuits, which -in addition or besides being excited externally by high-frequency signals-are able to produce autonomous signals, and the (filtered) average value or their spectra is used as output value.

In the first case the passive microwave scatterer produces a complicated and unique response to a high-frequency AC excitation. The operation is similar to the device of [41], with the significant differences that our object contains nonlinear elements (such as diodes / thresholding devices, possibly transistors), and that our object can be read out via electrical contacts. By applying a DC voltage on the circuit and setting an operating point, the same circuit can give a variety of AC responses. This can be used to (i) increase the information content of the circuit (ii) increase the compactness / reduce the size of the circuit (iii) make re-fabrication or imitation by passive elements more difficult. Diode-based passive circuits has a practically unlimited operation frequency (practically they certainly work in the several 100 GHz range), making digital synthesis impossible.

In the second case, due to the active circuit elements, the circuit does not require external excitation, and it can produce an autonomous AC signal. A possible realization involves coupled, high-frequency oscillators that can form a variety of stationary or non-stationary voltage patterns, an example of such circuits is given in [42]. The patterns can be influenced by the boundary conditions. A spectral analysis can extract larger amount of features from this circuit.

**Summary:**

Ultra-fast phenomena are in principle very well suited to create long-term secure unique objects, since they operate at the edge of technological and fundamental physical limits. It is known that they could be well generated and exploited inside closed chip environments; one potential problem is that electrical interfaces to the outside world could eat up the complexity and uniqueness of the output signals. Our central idea to solve this issue is to shift the need for ultra-high precision (in that case, ultra-high time resolutions) to the input signal and into the realm of optics. The creation of optical pulses with very high time resolution is standard technology, and the transfer of these pulses through air is not affected by strong disturbance effects. The output procedure can subsequently be done electrically, and with much lower accuracy and low time resolution. Ultimately even a one-bit output signal would suffice.

Specifically, we suggested a unique object based on ultrafast photodetectors, which is sensitive to the timing of some exciting laser pulses, but does not require fast read-out circuitry. The device speed is limited by fundamental material constants (generation rates, mobilities, etc), which are intrinsically difficult to overcome for fundamental reasons, and not just because of practical obstacles. This provides the aspired long-term security of our structures against intelligent imitation or simple reproduction of the object.

As a variation, it is possible to regenerate an optical signal from the output of the diode network, providing the whole system with both optical input and optical output signals. Besides the above highly-secure electrical - optical system we proposed a lower-security, purely electrical diode network, which produces different harmonics at different biasing points. Faking this extremely cheap circuit would require high-frequency signal generation or a tedious trial and error based refabrication process.

**Embodiment 4: Device based on Acoustic wave technology**

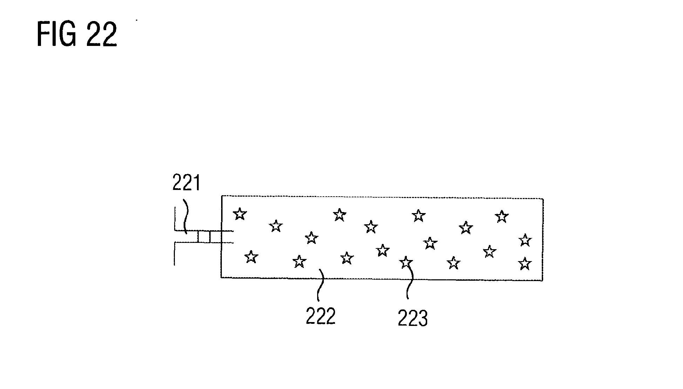

Another embodiment consists of a remotely readable device based on surface acoustic wave technology as shown in Figure 22. A suitable transducer 221 transforms an external electromagnetic signal into a surface acoustic wave which travels across a substrate 222. On the substrate 222 a very complex, random and unique pattern of reflectors 223 (metal coatings or etched holes) has been created by suitable lithographic techniques or by printing. The reflections from each reflector 223 interfere with each other and form a unique wave pattern traveling back to the transducer 221. There the reflected wave pattern is transformed into a corresponding unique electromagnetic wave, which in turn can be detected by a suitable detection device. A further extension of the described approach would consist of a device with more than one transducer, which could detect the wave pattern simultaneously at different locations of the substrate and could emit in different external directions. This would be a way to prevent mimicking of the signal or the response, respectively, from a remote source by using advanced transmission techniques. Nearfield triangulation of the device by a suitable antenna array can be a further measure to detect the origin of the electromagnetic response signal in space and to prevent external mimicking.

**Embodiment 5: Unique RFID chips**

RFID-chips with a random network of harmonic resonators are a fifth embodiment. Here a complex network of resonators, e.g. transmission line resonators is produced on a suitable substrate by a suitable production method. These resonantors produce a read-out signal which can again be detected as an outgoing electromagnetic response. The complexity and uniqueness comes from random interactions between a large number of random resonantors. It can be achieved by varying the key parameters of the resonantors (e.g. resonance frequency, damping and coupling to neighboring oscillators) through randomized production techniques (e.g. variation of resistance an/or resonance frequency by purposefully defective printing techniques). Then, each network of resonators exhibits a unique response to different incoming excitation signals.

To provide a reproducible interrogation method, the radiating structures have to be insensitive to their relative position (within fabrication uncertainties) and the relative position to the interrogator (within reasonable limits). In other words, the radiating structures (i.e. scatterers or antennas) need to be well defined and reproducible. The non-reproducible differences have to be within the circuit itself.

As radiating structures, standard well-defined planar antennas are used. These antennas are connected by some planar circuits, which contain non-linear components (diodes and/or transistors), transmission lines and couplers. Interrogation is done by irradiation of a single or multiple RF-signals at different amplitude (power density) levels. In the non-linear elements these signals are intermodulated and harmonics are generated. Especially at higher harmonics, the behavior of the passive structures depends critically on the actual dimensions of the metallization, the thickness and the permittivity of the substrate. The generation of harmonics and the intermodulation depend critically on the actual band gap, the quality of the Schottky-contact or the doping of the non-linear devices. Thus, the behavior of the circuit at higher harmonics is unique and non-reproducible. The interrogator measures the radiated intermodulation products or the fundamental frequency response. In order to become insensitive to the incident power (i.e. the distance between the interrogator and the RFID), measurement is done at different power levels. This allows for a power calibration, i.e. the interrogator changes the incident power until it recognizes a known, pre-defined pattern of intermodulation products. Then the radiated intermodulation spectrum is measured for predefined power offsets and compared to the expected spectra.

### 4.5.4 Read-Out Aspects

A general advantage of electrically addressable unique objects is the ease of the read-out procedure, which can occur either in direct electrical contact or remotely via electromagnetic waves. In both cases an advantage is the capability of shielding the unique object from the external environment by Faraday cage-like constructions containing the read-out system. This ensures that the detected signal indeed originates from the unique object. For remotely readable systems even triangulation of the position of the object would be possible with a suitable antenna array to again exclude external mimic attacks. Another advantage of some of the above embodiments is that the response can be probed over a wide range in frequency, thus further enhancing the uniqueness and the resistance of the objects against counterfeiting.

### 4.5.5 Unique Electrical Storage Media

It is conceivable to employ the described unique electrical structures in connection with standard electronic storage media in order to form unique electrical storage media. By the techniques described in section 3.2, digital content can be stored on such systems in a copy-protected form. Furthermore, copy-protected content can be generated and distributed "remotely" on such systems by the techniques of section 3.3.

### 5. Advantages:

Our work contributes the following new aspects compared to the state of the art in the field:

- It introduces one substantially new type of formal procedure/protocol, namely the remote generation of labels and the remote generation of copy-protected content. They are discussed in sections 2.4 and 3.3. These protocols allows the distribution of unforgeable labels or copy protected content over a binary data line (for example the internet), without physically transferring a unique object from location *A* to location *B*. This allows new applications, including new distribution structures and business models.

- It describes a number of novel physical implementations of unique objects. Examples include the use of optical microcavitites and energy transfer between neighboring nanoparticles. Compared to other known approaches, for example that of [5], some of our suggestions realise a structural sensitivity that is higher by up to three decimal orders of magnitude, which dramatically enhances their security features against faking.

- We also discuss a number of elect

- For the first time, we present a formal definition and framework for the treatment of unique objects.

Throughout the description and claims of this specification, the singular encompasses the plural unless the context otherwise requires. In particular, where the indefinite article is used, the specification is to be understood as contemplating plurality as well as singularity, unless the context requires otherwise.
Features, integers, characteristics, compounds or groups described in conjunction with a particular aspect, embodiment or example of the invention are to be understood to be applicable to any other aspect, embodiment or example described herein unless incompatible therewith.

### References

[1] D.W. Bauder, An Anti- Counterfeiting Concept for Currency Systems. Research report PTK-11990. Sandia National Labs. Albuquerque, NM, 1983.
[2] James D. R. Buchanan, Russel P. Cowburn, Ana-Vanessa Jausovec, Dorothee Petit, Peter Seem, Gang Xiong, Del Atkinson, Kate Fenton, Dan A. Allwood, Matthew T. Bryan: Fingerprinting documents and packaging. Nature Vol. 236, p. 475, 2005.
[3] Catherine Taylor Clelland, Viviana Risca, Carter Bancroft: Hiding Messages in DNA Microdots. Nature Vol 399, pp. 533 -- 534, 1999.
[4] Darko Kirovski: A Point-Set Compression Heuristic for Fiber-Based Certificates of Authenticity. DCC 2005: 103-112
[5] Darko Kirovski: Toward an automated verification of certificates of authenticity. ACM Conference on Electronic Commerce 2004: 160-169

[6] Darko Kirovski: Point Compression for Certificates of Authenticity. Data Compression Conference 2004: 545

[7] Gerald de Jean, Darko Kirovski: Radio Frequency Certificates of Authenticity. http://research.microsoft.com/users/darkok

[8] Gerald de Jean, Darko Kirovski, Certifying Authenticity using RF Waves, http://research.microsoft.com/users/darkok

[9] The technique was realised in a pilot project between Identif GmbH (www.identif.de), a subsidiary of November AG (www.november.de), and Bristol Myers Squibb (www.b-ms.de) to label three pharmaceutical products.

[10] R. Pappu, B. Recht, J. Taylor, N. Gershenfeld, Physical One-Way Functions, Science, vol. 297, pp. 2026-2030, 20 September 2002.

[14] Joshua R. Smith and Andrew V. Sutherland: Microstructure-Based Indicia. Proceedings of the Second Workshop on Automatic Identification Advanced Technologies, Morristown, NJ. October 1999, pp. 79-83.

[15] O. Matoba, T. Sawasaki, K. Nakajima, K. Nitta: Optical identification system of three-dimensional random phase object by use of speckle patterns in propagation distances. Journal of Physics Conference Series, Vol. 77, 2007.

[16] The World Economic Forum, Davos, 2004.

[17] Adi Shamir: Identity-Based Cryptosystems and Signature Schemes. CRYPTO 1984: 47-53

[18] José Rico-Garcia, Jose López-Alonso, and Javier Alda: Characterization of Photonic Crystal Microcavities with Manufacture Imperfections. Optics Express, Vol. 13, Issue 10, pp. 3802-3815.

[19] Maksim Skorobogatiy, Guillaume Begin, Anne Talneau: Statistical Analysis of Geometrical Imperfections from the Images of 2D Photonic Crystals. Optics Express, Vol. 13, Issue 7, p. 2487 ff.

[20] David Chaum: Blind signatures for untraceable payments. Advances in Cryptology - Crypto '82, Springer-Verlag (1983), 199-203.

[21] Ross Anderson (2001): Security Engineering. Wiley. ISBN 0-471-38922-6.

[23] P. Del'Haye, A. SchlieBer, O. Arcizet, T. Wilken, R. Holzwarth, and T.J. Kippenberg: Optical frequency comb generation from a monolithic microresonator. Nature 450, 1214 (2007).

[24] H. Cao, Topics in Applied Physics 82, 303 (2002).

[25] H. Cao et al., Appl. Phys. Lett. 76, 2997 (2000).

[26] D. Wiersma, Nature 406, 132 (2000).

[27] N.M. Lawandy et al., Nature 368, 436 (1994).

[28] H. Cao et al., Phys. Rev. E 61, 1985 (2000).

[29] S.V. Frolov et al., Phys. Rev. B 59, R5284 (1999).

[30] Y. Ling et al., Phys. Rev. A 64, 063808 (2001).

[31] M. Anni et al., phys. stat. sol. (c) 1,450 (2004).

[32] Ulrich R. et al., Adv.Mater. 11, 141 (1999).

[33] Bruce Schneier, Applied Cryptography. John Wiley & Sons, 1995. ISBN-10: 0471117099.

[41] Gerald DeJean, Darko Kirovski US patent No 2007/0005367 AI Radio frequency certificates of authenticity

[42] J. Berkemeier, T. Dirksmeyer, G. Klempt, H. G. Purwins: Pattern formation on a nonlinear periodic electrical network Zeitschrift für Physik B Condensed Matter Volume 65, Number 2 / June, 1986

[43] Vladimir Shalaev (ed.), Optical Properties of Nanostructured Random Media, Springer, Vol. 82, Topics in Applied Physics, 2002. Ch. by Andrey Sarychev and Vladimir Shalaev.

[51] R. M. Kraus, PRL 98, 017401 (2007)

[52] D. Tari et al., APL 87, 224101 (2005)

[53] D. Soujon et 1., J. Phys. Chem. C 111, 11511 (2007)

[54] T. Neal et al., APL 89, 221106 (2006)

[55] S. Link et al., J. Phys. Chem. B 103, 8410 (1999)

[98] Masay Notomi, Eiichi Kuracmochi, and T. Tanabe: Large Scale Arrays of ultrahigh-Q coupled nanocavities. Nature Photonics 2, 741 - 747 (2008).

[99] Yi-Jen Chiu, Siegfried B. Fleischer, Daniel Lasaosa, and John E. Bowers: Ultrafast (370 GHz bandwidth) p-i-n traveling wave photodetector using low-temperature-grown GaAs Appl. Phys. Lett. 71 (17), 27 October 1997

**Claims**

1. A method for security purposes with the acts of:

   - performing a measurement on a physical object (1) by:

       > using a measurement device (5) that is detachable from the physical object,
       > applying a challenge signal (6) generated by the measurement device (5) to the physical object (1)
       > receiving a response signal (7) dependent on a setting of the challenge signal (6) and dependent on the inner structure (8) of the object (1);

   - determining a characteristic of the response signal (7)
   - validating the response signal (7) by comparing a characteristic of the response signal (7) obtained by the measurement with a characteristic of a response signal obtained from a previous measurement;
   **characterized in that t**
   the response signal (7) comprises a plurality of characteristic resonant optical modes whose parameters depend on irregularities of the inner structure (8).

2. The method according to Claim 1,
wherein the characteristic of the response signal (7) includes an actual value and/or the dependency on time and/or the dependency on the challenge signal of at least one parameter of the group comprising spatial distribution, frequency, intensity, polarization, line width, Q-factor and direction of radiation.

3. The method according to Claim 1 or 2,
wherein the inner structure (8) comprises a photonic crystal (151, 181) with a basic periodic structure that varies with irregularities smaller than the period of the basic periodic structure.

4. The method according to any one of Claims 1 to 3,
wherein the inner structure comprises an optical resonator.

5. The method according to any one of Claims 1 to 4,
wherein the inner structure comprises a plurality of randomly distributed regions with induced light emission.

6. A method for security purposes with the acts of:

    - performing a measurement on a physical object (1) by:

        > using a measurement device (5) that is detachable from the physical object,
        > applying a challenge signal (6) generated by the measurement device (5) to the physical object (1)
        > receiving a response signal (7) dependent on a setting of the challenge signal (6) and dependent on the inner structure (8) of the object (1);

    - determining a characteristic of the response signal (7)
    - validating the response signal (7) by comparing a characteristic of the response signal (7) obtained by the measurement with a characteristic of a response signal obtained from a previous measurement;
    **characterized in that**
    the characteristic of the response signal (7) is determined based on a spatial resolution of at least two frequency components of the response signal that is affected by a luminescence effect.

7. The method according to Claim 6,
wherein the inner structure comprises particles (81, 82) interacting by energy transfer effects.

8. The method according to Claim 6,
wherein the energy transfer effect is a Förster-effect and/or a Dexter-effect.

9. The method according to any one of Claim 1 to 8,
wherein for the assignment of a functionality to an item (41, 51) by an authority, the following acts are performed:

    - the authority generates a digital signature of an individual description of the object at a remote location based on the characteristic of at least one response signal (7) and of an identification of the item (41, 51) using a secret signing key of the authority,
    - the authority transmits the digital signature to the remote location of the object enabling the assignment of the functionality to the item (41, 51) at the remote location.

10. The method according to Claim 9 ,
wherein the authority combines the digital signature with a tag issued by a central authority and comprising a digital authorizing signature of an identification of the authority and the public key of the authority using a secret signing key of the central authority.

11. An item provided with a physical object for performing the method according to any one of the Claims 1 to 10,
wherein the item is a bank note, an identification item, an identity item, an access item, a bank card, an identification card, an identity card, a passport, a branded product, a consumer product, a pharmaceutical, a digital content on a data carrier or a software product on a data carrier.

12. A software product for security purposes,
wherein the software product comprises program code for implementing any one of the methods according to claim 1 to 11.

**Patentansprüche**

1. Verfahren für Sicherheitszwecke mit den Handlungen:

    - Ausführen einer Messung an einem physikalischen Objekt (1) durch:

        > Verwenden eines Messgeräts (5) das vom physikalischen Objekt entfernbar ist,
        > Anwenden eines von dem Messgerät (5) erzeugten Anforderungssignal (6) an das physikalische Objekt (1),
        > Empfangen eines Antwortsignals (7) in Abhängigkeit von den Einstellungen des Anforderungssignals (6) und in Abhängigkeit von der inneren Struktur (8) des Objekts (1);

- Bestimmen eines Kennzeichens des Antwortsignals (7),
- Validieren des Antwortsignals (7), indem ein Kennzeichen des durch die Messung erhaltenen Antwortsignals (7) mit einem Kennzeichen eines von einer vorhergehenden Messung erhaltenen Antwortsignals verglichen wird;
**dadurch gekennzeichnet, dass** das Antwortsignal (7) eine Vielzahl von kennzeichnenden resonanten optischen Moden aufweist, deren Parameter von den Irregularitäten der inneren Struktur (8) abhängen.

2. Verfahren nach Anspruch 1,
bei dem das Kennzeichen des Antwortsignals (7) einen tatsächlichen Wert und/oder die Zeitabhängigkeit und/oder die Abhängigkeit vom Anforderungssignal von wenigstens einem Parameter aus der Gruppe einschließt, die die räumliche Verteilung, die Frequenz, die Intensität, die Polarisation, die Linienbreite, den Q-Faktor und die Strahlungsrichtung umfasst.

3. Verfahren nach Anspruch 1 oder 2,
bei dem die innere Struktur (8) einen photonischen Kristall (151, 181) mit einer grundlegenden periodischen Struktur umfasst, die mit Irregularitäten kleiner als die Periode der grundlegenden periodischen Struktur variiert.

4. Verfahren nach einem der Ansprüche 1 bis 3,
bei dem die innere Struktur einen optischen Resonator aufweist.

5. Verfahren nach einem der Ansprüche 1 bis 4,
bei dem die innere Struktur eine Vielzahl von zufällig verteilten Bereichen mit induzierter Lichtemission aufweist.

6. Verfahren für Sicherheitszwecke mit den Handlungen:

- Ausführen einer Messung an einem physikalischen Objekt (1) durch:

> Verwenden eines Messgeräts (5) das vom physikalischen Objekt entfernbar ist,
> Anwenden eines von dem Messgerät (5) erzeugten Anforderungssignal (6) an das physikalische Objekt (1),
> Empfangen eines Antwortsignals (7) in Abhängigkeit von den Einstellungen des Anforderungssignals (6) und in Abhängigkeit von der inneren Struktur (8) des Objekts (1);

- Bestimmen eines Kennzeichens des Antwortsignals (7),
- Validieren des Antwortsignals (7), indem ein Kennzeichen des durch die Messung erhaltenen Antwortsignals (7) mit einem Kennzeichen eines von einer vorhergehenden Messung erhaltenen Antwortsignals verglichen wird;
**dadurch gekennzeichnet, dass** das Kennzeichen des Antwortsignals (7) auf der Grundlage einer räumlichen Auflösung von wenigstens zwei Frequenzkomponenten des Antwortsignals bestimmt wird, das von einem Lumineszenzeffekt beeinflusst ist.

7. Verfahren nach Anspruch 6,
bei dem die innere Struktur Teilchen (81, 82) aufweist, die über Energieübertragungseffekte aufeinander einwirken.

8. Verfahren nach Anspruch 6,
bei dem der Energieübertragungseffekt ein Förster-Effekt und/oder ein Dexter-Effekt ist.

9. Verfahren nach einem der Ansprüche 1 bis 8,
bei dem für die Zuweisung einer Funktionalität zu einem Gegenstand (41, 51) durch eine Autorität die folgenden Handlungen vorgenommen werden:

- die Autorität erzeugt eine digitale Signatur einer individuellen Beschreibung des Objekts an einem entfernten Ort auf der Grundlage des Kennzeichens von wenigstens einem Antwortsignal (7) und einer Identifikation des Gegenstands (41, 51) unter Verwendung eines geheimen Signaturschlüssels der Autorität,
- die Autorität überträgt die digitale Signatur zu dem entfernten Ort des Objekts und ermöglicht dadurch die Zuweisung der Funktionalität zu dem Gegenstand (41, 51) am entfernten Ort.

10. Verfahren nach Anspruch 9,
bei dem die Autorität die digitale Signatur mit einem Kennzeichner kombiniert, der von der zentralen Autorität erstellt worden ist und eine digitale Signatur einer Identifizierung der Autorität und des öffentlichen Schlüssels der Autorität aufweist, wobei ein geheimer Signaturschlüssel der zentralen Autorität verwendet wird.

11. Gegenstand, der mit einem physikalischen Objekt zum Ausführen des Verfahrens nach einem der Ansprüche 1 bis 10 versehen ist,
wobei der Gegenstand eine Banknote, ein Identifikationsgegenstand, ein Identitätsgegenstand, ein Zugangsgegenstand, eine Bankkarte, eine Identifikationskarte, ein Ausweis, ein Pass, ein Markenprodukt, ein Verbraucherprodukt, ein Arzneimittel, ein digitaler Inhalt auf einem Datenträger oder ein Softwareprodukt auf einem Datenträger ist.

**12.** Softwareprodukt für Sicherheitszwecke, bei dem das Softwareprodukt Programmcode für die Implementierung eines der Verfahren gemäß Anspruch 1 bis 11 aufweist.

**Revendications**

**1.** Procédé à des fins de sécurité, comprenant les actes :

- la mise en oeuvre d'une mesure sur un objet physique (1) par :
- l'utilisation d'un dispositif de mesure (5) qui est détachable de l'objet physique,
- l'application d'un signal de stimulation (6) généré par le dispositif de mesure (5) à l'objet physique (1),
- la réception d'un signal de réponse (7) dépendant d'un réglage du signal de stimulation (6) et dépendant de la structure interne (8) de l'objet (1) ;
- la détermination d'une caractéristique du signal de réponse (7),
- la validation du signal de réponse (7) par la comparaison d'une caractéristique du signal de réponse (7) obtenu par la mesure à une caractéristique d'un signal de réponse obtenu lors d'une mesure antérieure ;
**caractérisé en ce que**
le signal de réponse (7) comprend une pluralité de modes optiques résonnants caractéristiques dont les paramètres dépendent des irrégularités de la structure interne (8).

**2.** Procédé selon la revendication 1, dans lequel la caractéristique du signal de réponse (7) comprend une valeur réelle et/ou la dépendance au temps et/ou la dépendance au signal de stimulation d'au moins un paramètre du groupe comprenant une distribution spatiale, une fréquence, une intensité, une polarisation, une largeur de ligne, un facteur de qualité et un sens de rayonnement.

**3.** Procédé selon la revendication 1 ou 2, dans lequel la structure interne (8) comprend un cristal photonique (151, 181) ayant une structure périodique de base qui varie avec des irrégularités inférieures à la période de la structure périodique de base.

**4.** Procédé selon l'une quelconque des revendications 1 à 3, dans lequel la structure interne comprend un résonateur optique.

**5.** Procédé selon l'une quelconque des revendications 1 à 4, dans lequel la structure interne comprend une pluralité de régions réparties de manière aléatoire avec une émission de lumière induite.

**6.** Procédé à des fins de sécurité, comprenant les actes :

- la mise en oeuvre d'une mesure sur un objet physique (1) par :
- l'utilisation d'un dispositif de mesure (5) qui est détachable de l'objet physique,
- l'application d'un signal de stimulation (6) généré par le dispositif de mesure (5) à l'objet physique (1),
- la réception d'un signal de réponse (7) dépendant d'un réglage du signal de stimulation (6) et dépendant de la structure interne (8) de l'objet (1) ;
- la détermination d'une caractéristique du signal de réponse (7),
- la validation du signal de réponse (7) par la comparaison d'une caractéristique du signal de réponse (7) obtenu par la mesure à une caractéristique d'un signal de réponse obtenu lors d'une mesure antérieure ;
**caractérisé en ce que**
la caractéristique du signal de réponse (7) est déterminée sur la base d'une résolution spatiale d'au moins deux composantes de fréquence du signal de réponse qui est affectée par un effet de luminescence.

**7.** Procédé selon la revendication 6, dans lequel la structure interne comprend des particules (81, 82) interagissant par des effets de transfert d'énergie.

**8.** Procédé selon la revendication 6, dans lequel l'effet de transfert d'énergie est un effet de Förster et/ou un effet de Dexter.

**9.** Procédé selon l'une quelconque des revendications 1 à 8, dans lequel pour l'attribution d'une fonctionnalité à un article (41, 51) par une autorité, les actes suivants sont exécutés :

- l'autorité génère une signature numérique d'une description individuelle de l'objet à un emplacement éloigné sur la base de la caractéristique d'au moins un signal de réponse (7) et d'une identification de l'article (41, 51) au moyen d'une clé de signature secrète de l'autorité,
- l'autorité transmet la signature numérique à l'emplacement éloigné de l'objet pour permettre l'attribution de la fonctionnalité à l'article (41, 51) à l'emplacement éloigné.

10. Procédé selon la revendication 9,
dans lequel l'autorité combine la signature numérique à une étiquette délivrée par une autorité centrale et comprenant une signature numérique d'autorisation d'une identification de l'autorité et la clé publique de l'autorité au moyen d'une clé de signature secrète de l'autorité centrale.

11. Article doté d'un objet physique permettant de mettre en oeuvre le procédé selon l'une quelconque des revendications 1 à 10,
dans lequel l'article est un billet de banque, un article d'identification, un article d'identité, un article d'accès, une carte bancaire, une carte d'identification, une carte d'identité, un passeport, un produit de marque, un produit de consommation, un produit pharmaceutique, un contenu numérique sur un support de données ou un produit logiciel sur un support de données.

12. Produits logiciels à des fins de sécurité,
dans lequel le produit logiciel comprend un code de programme pour mettre en oeuvre l'un quelconque des procédés selon les revendications 1 à 11.

FIG 1

FIG 2

## FIG 3

31 — Alice — Holds unique object O

Binary communication

32 — Bob — Holds secret signing key SK$_B$

1 — Label — 33

## FIG 4

41

100 Euro

1

1100101001001001000100100101001001010010001001 00

Unique object O, with unique properties UP

Numerical String S, with S = UP, V, AI, Sig$_{SK}$(UP, V, AI)

## FIG 5

Picture of the card holder

51

53

Biometric data

Unique object O

52

Mr. X

1010101101011011 1010010100101

1

Digital information I

Digital signature Sig$_{SK}$ (I, AI)

Name of card holder

FIG 6

FIG 7

FIG 8

# FIG 9

# FIG 10

## FIG 11

## FIG 12

## FIG 13

## FIG 14

## FIG 15

300 nm

151

152

153

## FIG 16

1. Press
Mold

161

162        164
163

2. Remove
Mold                165

166

3. RIE

## FIG 17

FIG 18

Exposed Air Hole PCS

Encapsulated PCS

182

181

183

184

FIG 19

191

192

FIG 20

FIG 21

FIG 22

221

222    223

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070005367 A1, Gerald DeJean, Darko Kirovski

**Non-patent literature cited in the description**

- **PAPPU, R. ; RECHT, B. ; TAYLOR, J. ; GERSHENFELD, N.** Physical One-Way Functions. *Science,* 20 September 2002, vol. 297, 2026-2030
- **D.W. BAUDER.** *An Anti- Counterfeiting Concept for Currency Systems,* 1983
- **JAMES D. R. BUCHANAN ; RUSSEL P. COWBURN ; ANA-VANESSA JAUSOVEC ; DOROTHEE PETIT ; PETER SEEM ; GANG XIONG ; DEL ATKINSON ; KATE FENTON ; DAN A. ALLWOOD ; MATTHEW T. BRYAN.** Fingerprinting documents and packaging. *Nature,* 2005, vol. 236, 475
- **CATHERINE TAYLOR CLELLAND ; VIVIANA RISCA ; CARTER BANCROFT.** Hiding Messages in DNA Microdots. *Nature,* 1999, vol. 399, 533-534
- **DARKO KIROVSKI.** *A Point-Set Compression Heuristic for Fiber-Based Certificates of Authenticity,* 2005, 103-112
- **DARKO KIROVSKI.** Toward an automated verification of certificates of authenticity. *ACM Conference on Electronic Commerce,* 2004, 160-169
- **DARKO KIROVSKI.** Point Compression for Certificates of Authenticity. *Data Compression Conference,* 2004, 545
- **GERALD DE JEAN ; DARKO KIROVSKI.** *Radio Frequency Certificates of Authenticity, http://research.microsoft.com/users/darkok*
- **GERALD DE JEAN ; DARKO KIROVSKI.** *Certifying Authenticity using RF Waves, http://research.microsoft.com/users/darkok*
- **R. PAPPU ; B. RECHT ; J. TAYLOR ; N. GERSHENFELD.** Physical One-Way Functions. *Science,* 20 September 2002, vol. 297, 2026-2030
- **JOSHUA R. SMITH ; ANDREW V. SUTHERLAND.** Microstructure-Based Indicia. *Proceedings of the Second Workshop on Automatic Identification Advanced Technologies,* October 1999, 79-83
- **O. MATOBA ; T. SAWASAKI ; K. NAKAJIMA ; K. NITTA.** Optical identification system of three-dimensional random phase object by use of speckle patterns in propagation distances. *Journal of Physics Conference Series,* 2007, vol. 77
- **DAVOS.** *The World Economic Forum,* 2004
- **ADI SHAMIR.** Identity-Based Cryptosystems and Signature Schemes. *CRYPTO 1984,* 1984, 47-53
- **JOSÉ RICO-GARCIA ; JOSE LÓPEZ-ALONSO ; JAVIER ALDA.** Characterization of Photonic Crystal Microcavities with Manufacture Imperfections. *Optics Express,* vol. 13 (10), 3802-3815
- **MAKSIM SKOROBOGATIY ; GUILLAUME BEGIN ; ANNE TALNEAU.** Statistical Analysis of Geometrical Imperfections from the Images of 2D Photonic Crystals. *Optics Express,* vol. 13 (7), 2487 ff
- Blind signatures for untraceable payments. **DAVID CHAUM.** Advances in Cryptology - Crypto '82. Springer-Verlag, 1983, 199-203
- **ROSS ANDERSON.** Security Engineering. Wiley, 2001
- **P. DEL'HAYE ; A. SCHLIEBER ; O. ARCIZET ; T. WILKEN ; R. HOLZWARTH ; T.J. KIPPENBERG.** Optical frequency comb generation from a monolithic microresonator. *Nature,* 2007, vol. 450, 1214
- **H. CAO.** *Topics in Applied Physics,* 2002, vol. 82, 303
- **H. CAO et al.** *Appl. Phys. Lett.,* 2000, vol. 76, 2997
- **D. WIERSMA.** *Nature,* 2000, vol. 406, 132
- **N.M. LAWANDY et al.** *Nature,* 1994, vol. 368, 436
- **H. CAO et al.** *Phys. Rev.,* 2000, vol. E 61, 1985
- **S.V. FROLOV et al.** *Phys. Rev. B,* 1999, vol. 59, R5284
- **Y. LING et al.** *Phys. Rev.,* 2001, vol. A 64, 063808
- **M. ANNI et al.** *phys. stat. sol.,* 2004, vol. 1, 450
- **ULRICH R. et al.** *Adv.Mater.,* 1999, vol. 11, 141
- **BRUCE SCHNEIER.** Applied Cryptography. John Wiley & Sons, 1995
- **J. BERKEMEIER ; T. DIRKSMEYER ; G. KLEMPT ; H. G. PURWINS.** Pattern formation on a nonlinear periodic electrical network. *Zeitschrift für Physik B Condensed Matter,* June 1986, vol. 65 (2

- Optical Properties of Nanostructured Random Media. Topics in Applied Physics. Springer, vol. 82
- **R. M. KRAUS.** *PRL,* 2007, vol. 98, 017401
- **D. TARI et al.** *APL,* 2005, vol. 87, 224101
- **D. SOUJON.** *J. Phys. Chem. C,* 2007, vol. 111, 11511
- **T. NEAL et al.** *APL,* 2006, vol. 89, 221106
- **MASAY NOTOMI ; EIICHI KURACMOCHI ; T. TANABE.** Large Scale Arrays of ultrahigh-Q coupled nanocavities. *Nature Photonics,* 2008, vol. 2, 741-747
- **YI-JEN CHIU ; SIEGFRIED B. FLEISCHER ; DANIEL LASAOSA ; JOHN E. BOWERS.** Ultrafast (370 GHz bandwidth) p-i-n traveling wave photodetector using low-temperature-grown GaAs. *Appl. Phys. Lett.,* 27 October 1997, vol. 71